# EUROPEAN PATENT SPECIFICATION

(11) **EP 3 507 507 B1**
(45) Date of publication and mention of the grant of the patent: **15.07.2020**
(21) Application number: 17757938.0
(22) Date of filing: 02.08.2017
(51) Int. Cl.: F16B 2/10, F16B 5/06, E04B 1/38, B65D 90/10, E04F 19/08, F16B 5/02, F16B 11/00, F16B 37/06, F16B 37/14, F16B 43/00

(54) **FASTENER ASSEMBLIES FOR DETACHABLY COUPLING STRUCTURES TOGETHER**
BEFESTIGUNGSANORDNUNGEN ZUR LÖSBAREN VERBINDUNG VON STRUKTUREN MITEINANDER
ENSEMBLES DE FIXATION DESTINÉS À L'ACCOUPLEMENT AMOVIBLE DE STRUCTURES

(30) Priority: 31.08.2016 US 201662381671 P
(43) Date of publication of application: 10.07.2019
(73) Proprietor: ExxonMobil Research and Engineering Company, Annandale, NJ 08801-0900 (US)
(72) Inventor: LEVESQUE, Bryant R., Spring Texas 77389 (US); DAVIS, Colin J., Spring TX 77381 (US); RICE, Jacob D., Houston, TX 77007 (US); CARROLL, John R., Kingwood Texas 77345 (US)
(74) Representative: ExxonMobil Chemical Europe Inc.
(86) International application number: PCT/US2017/045017
(87) International publication number: WO 2018/044476

(56) References cited:
- WO-A1-2009/153467
- FR-A1- 2 677 714
- FR-A1- 2 804 738
- GB-A- 2 220 244
- US-A- 3 436 860

## Description

### FIELD

The present disclosure relates to fastener assemblies for detachably coupling structures together.

### BACKGROUND

This section provides background information related to the present disclosure which is not necessarily prior art.

Reactors include various structures that are commonly moved to allow a user to gain access behind the structures, work on the structure, etc. In some cases, two of the structures may be coupled together via bolts, clips, etc. Typically, each of these devices coupling the structures together requires a precise alignment between the structures and/or a precise device placement on the structures. Sometimes, a user must damage (e.g., grind, cut, etc.) the bolts, the clips, etc. to separate the coupled structures and gain access behind the structures, work on the structures, etc. Document WO 2009/153467 A1 discloses a fastener assembly with the features of the preamble of claim 1.

### SUMMARY

This section provides a general summary of the disclosure, and is not a comprehensive disclosure of its full scope or all of its features. The invention is defined by independent claim 1. Dependent claims 2 to 12 define preferred embodiments of the invention.

According to one aspect of the present disclosure, a fastener assembly for detachably coupling two structures together includes a stud configured to couple to a first structure such that the stud extends from the first structure when the stud is coupled to the first structure, a body configured to pivotally couple to a second structure different than the first structure, and a fastener configured to detachably couple to the stud. The body is pivotable between a closed position in which the body is positioned adjacent the stud when coupled to the first structure and an open position in which the body is positioned aside from the first structure. The body defines at least one aperture for receiving the stud when the body is in the closed position. The fastener is configured to force the body against the first structure when the body is in the closed position to detachably couple the first structure to the second structure.

According to another aspect of the present disclosure, a system includes a plurality of structures having a first structure and a second structure, and one or more fastener assemblies for detachably coupling the first structure to the second structure. At least one fastener assembly of the one or more fastener assemblies includes a stud coupled to the first structure, a body pivotally coupled to the second structure, and a fastener configured to detachably couple to the stud. The body is pivotable between a closed position in which the body is positioned adjacent the stud and an open position in which the body is positioned aside from the first structure. The body defines at least one aperture for receiving the stud when the body is in the closed position. The fastener is configured to force the body against the first structure when the body is in the closed position to couple the first structure to the second structure.

According to yet another aspect of the present disclosure, a fastener assembly for detachably coupling two structures together includes a lever configured to pivotably couple to a first structure such that the lever extends from the first structure when the lever is coupled to the first structure, and a stud having a first end and a second end opposing the first end. The first end of the stud is pivotably coupled to the lever and the second end of the stud is configured to couple to a second structure overlapping a portion of a third structure. The lever is pivotable between a closed position in which the stud is compressed against the second structure when the second structure is overlapping the portion of the third structure thereby coupling the third structure and the second structure together, and an open position in which the stud is released from its compressed engagement with the third structure.

According to another aspect of the present disclosure, a system includes a plurality of structures having a first structure, a second structure, and a third structure at least partially overlapping the second structure, and one or more fastener assemblies for detachably coupling the second structure to the third structure. At least one fastener assembly of the one or more fastener assemblies includes a lever pivotably coupled to the first structure, and a stud having a first end and a second end opposing the first end. The first end of the stud pivotably is coupled to the lever and the second end of the stud is configured to couple to the third structure. The lever is pivotable between a closed position in which the stud is compressed against the third structure thereby coupling the third structure and the second structure together, and an open position in which the stud is released from its compressed engagement with the third structure.

Accordingly to yet another aspect of the present disclosure, a fastener assembly for detachably coupling two structures together includes a stud configured to couple to a first structure such that the stud extends from the first structure when the stud is coupled to the first structure, a body configured to detachably couple to the stud and including a main section defining an aperture for receiving the stud and a plate section extending from the main section, and a fastener configured to detachably couple to the stud for limiting linear movement of the body along the stud. The body is rotatable about the stud between a closed position in which at least a portion of the body is constrained between the fastener and a second structure causing the second structure to press against and couple to the first structure, and an open position in which the body is aside from the second structure.

According to another aspect of the present disclosure, a system including a plurality of structures having a first structure and a second structure, and one or more fastener assemblies for detachably coupling the first structure to the second structure. At least one fastener assembly of the one or more fastener assemblies includes a stud coupled to the first structure such that the stud extends from the first structure, a body configured to detachably couple to the stud, and a fastener configured to detachably couple to the stud for limiting linear movement of the body along the stud. The body includes a main section defining an aperture for receiving the stud and a plate section extending from the main section. The body is rotatable about the stud between a closed position in which at least a portion of the body is constrained between the fastener and the second structure causing the second structure to press against and couple to the first structure, and an open position in which the body is aside from the second structure.

Further aspects and areas of applicability will become apparent from the description provided herein. It should be understood that various aspects of this disclosure may be implemented individually or in combination with one or more other aspects. It should also be understood that the description and specific examples herein are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
Figs. 1A and 1B each illustrate a side view of a fastener assembly including a body pivotable between positions according to one example embodiment of the present disclosure.
Fig. 2 illustrates a side view of a fastener assembly including a protrusion extending from a bottom side of the body of Figs. 1A and 1B according to another example embodiment.
Fig. 3 illustrates a side view of a fastener assembly including the body of Figs. 1A and 1B and a gasket according to yet another example embodiment.
Figs. 4-6 illustrate a side view, a front view, and a top view, respectively, of a fastener assembly including a stud, the body of Figs. 1A and 1B, and an encapsulating nut coupled to the stud according to another example embodiment.
Figs. 7A and 7B each illustrate a side view of a fastener assembly including a stud and a lever pivotable between positions according to yet another example embodiment.
Fig. 8 illustrates a side view of a fastener assembly including the lever of Figs. 7A and 7B, and a stud having a compression arm and a compression foot according to another example embodiment.
Figs. 9A and 9B illustrate a side view and a front view, respectively, of a compression arm including two arms and one brace according to yet another example embodiment.
Figs. 10A and 10B illustrate a side view and a front view, respectively, of a compression foot including an adjustable auxiliary body according to another example embodiment.
Figs. 11A and 11B illustrate a side view and a front view, respectively, of a lever including two lever arms and two braces according to yet another example embodiment.
Figs. 12A-12C each illustrate a side view of a fastener assembly including the compression arm of Figs. 9A and 9B, the compression foot of Figs. 10A and 10B, and the lever of Figs. 11A and 11B according to another example embodiment.
Figs. 13 and 14 illustrate a side view and a front view, respectively, of a fastener assembly including a stud and a body rotatable about the stud for coupling two structures together according to yet another example embodiment.
Figs. 15 and 16 illustrate a side view and a front view, respectively, of a fastener assembly including a stud, a stop, an encapsulating nut coupled to the stud, and a base and a body each rotated about the stud to a closed position for coupling two structures together according to another example embodiment.
Fig. 17 illustrates a front view of the fastener assembly of Figs. 15 and 16 with the base and the body each rotated to an open position.
Figs. 18A and 18B illustrate a top view and a side view, respectively, of the body of Fig. 15-17.
Figs. 19A-19C illustrate a top view and side views of the base of Fig. 15-17.
Fig. 20 illustrates a side view of the stop of Fig. 15-17.
Figs. 21 and 22 illustrate a side view and a front view, respectively, of a fastener assembly including a stud coupled to one structure, a base coupled to another structure, and a body rotated about the stud to a closed position for coupling the structures together according to yet another example embodiment.
Fig. 23 illustrates a front view of the fastener assembly of Figs. 21 and 22 with the body rotated to an open position.
Figs. 24A and 24B each illustrate a side view of the base of Figs. 21-23.
Figs. 25 and 26 illustrate a side view and a front view, respectively, of a fastener assembly including a stud, two bases each coupled to a structure, and a body having two plates rotated about the stud to a closed position according to another example embodiment.
Fig. 27 illustrates a front view of the fastener assembly of Figs. 25 and 26 with the body rotated to an open position.
Figs. 28A and 28B illustrate a top view and a side view, respectively, of the body of Fig. 25-27.
Fig. 29 illustrates a top view of a system including four fastener assemblies of Figs. 13 and 14 according to yet another example embodiment.
Fig. 30 illustrates a top view of a system including two fastener assemblies of Figs. 4-6 and two fastener assemblies of Figs. 7A and 7B according to another example embodiment.
Corresponding reference numerals indicate corresponding parts and/or features throughout the several views of the drawings.

### DETAILED DESCRIPTION

### A. Definitions

To facilitate an understanding of the present disclosure, a number of terms and phrases are defined below.

As used in the present disclosure and claims, the singular forms "a," "an," and "the" include plural forms unless the context clearly dictates otherwise. Additionally, the terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

The term "and/or" as used in a phrase such as "A and/or B" herein is intended to include "A and B", "A or B", "A", and "B".

The term "structure" used herein refers to any physical object and/or objects coupled together. For example, a structure may include one or more manway covers, reactors, manway cover trays, tray deck panels, beams, enclosures, etc. and/or a portion thereof.

The term "reactor" refers to any vessel(s) in which a chemical reaction occurs. A reactor includes both distinct reactors as well as reaction zones within a single reactor apparatus. In other words and as is common, a single reactor may have multiple reaction zones.

The term "user" refers any person and/or object controllable by a person. For example, an object may include one or more non-motorized objects, motorized objects, etc.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another element, component, region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Additionally, spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

### B. Example Fastener Assemblies

The present disclosure relates to various example fastener assemblies for detachably coupling at least two structures together. For example, each of the fastener assemblies includes features that can work in conjunction to compress one structure against another structure thereby coupling the structures together. In such examples, the fastener assemblies may utilize one or more mechanical devices including, for example, levers, clamps, plates, threads, etc., to exert a compression force against the structures. In some examples, and as further explained below, one or more of the fastener assemblies may include features to hold the coupled structures in a compressed state to seal the structures together.

Additionally, the fastener assemblies may be manipulated to allow a user to separate the structures. For example, the fastener assemblies disclosed herein may include features that remove the compression force against the structures. For instance, a user may manipulate one or more features of one of the fastener assemblies to remove the compression force against the structures, to move the fastener assembly away from the structures, etc. These features may include, for example, levers, clamps, plates, threads and/or one or more other suitable mechanical devices.

By employing the fastener assemblies disclosed herein, at least two structures can be coupled together and/or detached with greater ease than other known assemblies. For example, a user may exert a low force (e.g., an input force) on a fastener assembly to ensure the assembly provides a sufficient compression force to hold two structures together. In such examples, this force can be provided by the user without specialty tools, and in some cases, without tools. Additionally, the fastener assemblies can be installed on structures both in confined spaces and away from confined spaces. Thus, a user can access and manipulate the fastener assemblies with ease.

In addition, the fastener assemblies may be used repeatedly over an extended period of time without concern of malfunctioning. As such, time and money spent on installing new assemblies, moving assemblies, removing inoperable assemblies can be reduced.

Further, the fastener assemblies are able to couple multiple structures together without requiring fastener holes or the like in the structures, as is commonly required in conventional systems. As such, one or more structures coupled together via any one of the fastener assemblies may or may not include fastener hole(s). As the fastener assemblies do not require fastener holes, the fastener assemblies can reduce, and in some cases eliminate, fluid (e.g., gas, liquid, etc.) leaks in the structures compared to conventional systems.

Additionally, the fastener assemblies provide generic assemblies that may be used in various applications. This can give a user flexibility of where to use the fastener assemblies, how to couple particular structures together, etc. Further, this flexibility can substantially reduce (and in some cases eliminate) the need for specific tools to ensure a particular alignment between the assemblies and the structures.

The fastener assemblies disclosed herein may be used in various applications and therefore couple various different structures together. The fastener assemblies can be installed on new structures and/or existing structures. For example, the fastener assemblies can be used to ensure a manway in a reactor is sealed, covered, etc. against a supporting structure. In such examples, the fastener assemblies can be used to detachable couple a new and/or existing manway cover in the reactor to a platform, beam, etc. adjacent to, surrounding, etc. the manway cover to ensure the manway is sealed, covered, etc. In other examples, one or more panels may be coupled to another panel, a beam, a platform, etc.

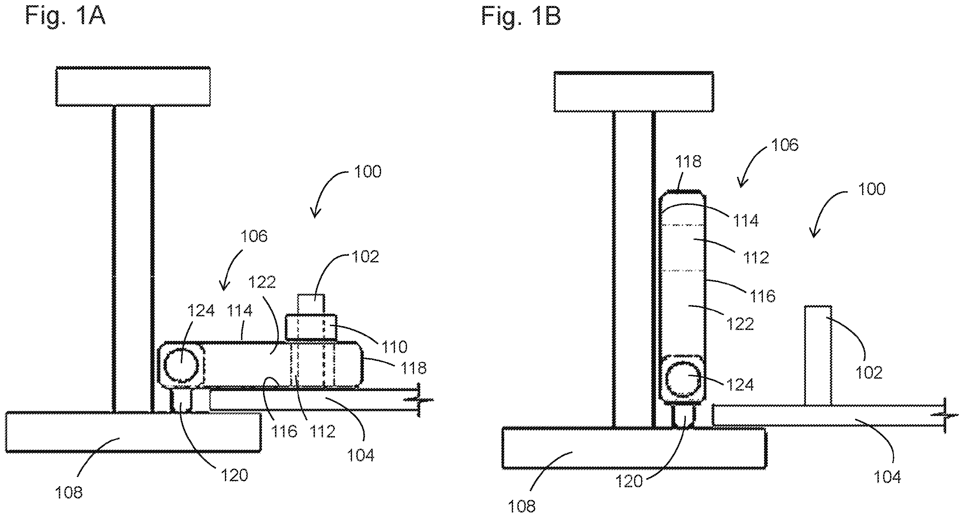

The fastener assembly embodiments of the present disclosure, including the specific example embodiments described below and shown in Figs. 1-28, may include one or more of the various benefits and/or optional features disclosed herein.

For example, and in one embodiment, a fastener assembly may include a stud coupled to a structure, a body pivotally coupled to another structure, and a fastener detachably coupled to the stud. The body can pivot between a closed position in which the body is positioned adjacent the stud and an open position in which the body is positioned aside from the stud. When the body is in its closed position, the fastener can force the body against the structure coupled to the stud to detachably couple the structures together.

In another embodiment, a fastener assembly may include a lever pivotably coupled to a structure, and a stud having an end pivotably coupled to the lever and another end for coupling to another structure. The lever can pivot between a closed position in which the stud is compressed against the other structure thereby coupling the structures together and an open position in which the stud is released from its compressed engagement with the structure.

In another embodiment, a fastener assembly may include a stud coupled to a structure, a body detachably coupled to the stud and including a main section defining an aperture for receiving the stud and a plate section extending from the main section, and a fastener detachably coupled to the stud for limiting linear movement of the body along the stud. The body may be rotatable about the stud between a closed position in which at least a portion of the body is constrained between the fastener and a second structure causing the second structure to press against and couple to the first structure, and an open position in which the body is aside from the second structure.

The features of the fastener assemblies including, for example, bodies, levers, studs, fasteners, etc. may be coupled together, coupled to structures, etc. in any suitable manner. For example, in some embodiments, one feature may be welded, adhered, etc. to a structure. Likewise, one feature may be welded, adhered, etc. to another feature. In other embodiments, the features may be coupled together, coupled to structures, etc. via one or more mechanical fasteners. For example, if the fastener assembly includes a body, that body can be pivotally coupled to a structure via one or more hinges, pins, screws, nuts, rivets, etc.

Additionally or alternatively, the features may include adjustable portions, as further explained below. For example, if the fastener assembly includes a stud, that stud can include threaded inserts, telescoping members, pins and/or one or more other suitable mechanisms to adjust a length of the stud. As such, the stud (and/or another feature disclosed herein) can be extended and/or shortened depending on, for example, design specifications, etc.

Additionally or alternatively, some features may be used to constrain movement of another feature. For example, if the fastener assembly includes a fastener, that fastener may be used to constrain movement of another feature (e.g., a body, etc.). In other examples, the fastener assembly may include a base to at least partially constrain movement of another feature (e.g., a body, etc.).

Further, some features and/or structures may be coupled to one another via one or more gaskets. For example, the gaskets may assist in providing a seal between features, structures, etc. as further explained below.

The gaskets disclosed herein may include any suitable size and shape depending on, for example, the size and shape of adjacent features and/or structures, particular design requirements, etc. Additionally, the gaskets may be formed of any suitable material. For example, the gaskets may include or be rubber, silicone, metallic, cork, plastic (e.g., polytetrafluoroethylene, etc.), thermoglass fiber, ceramic fiber, or combinations thereof. Further, the gaskets each may be any suitable type of gasket such as, for example, a tape gasket.

The features such as the bodies, the levers, the studs, the fasteners, etc., may be formed of any suitable material(s). For example, any one of the features can be formed of one or more metallic materials such as steel (e.g., stainless steel, etc.), brass, aluminum, etc. and/or alloys thereof, and/or one or more nonmetallic materials such as plastic (e.g., polyvinyl chloride, etc.). The materials used can be determined based on, for example, design specifications such as maximum forces applied, desired location, etc.

Additionally, the features can be sized, shaped, etc. as desired. In some embodiments, one feature may be sized, shaped, etc. based on a size, shape, etc. of another feature.

### C. Example Systems

The present disclosure also relates to various systems including two or more structures and one or more fastener assemblies for coupling two of the structures together. The fastener assemblies may include any suitable fastener assembly including, for example, any one or more of the fastener assemblies disclosed herein.

In some examples, a system may include only one type of fastener assemblies. For example, the system may include nine (and/or another suitable number) of the same fastener assemblies to couple two or more of the structures together. Alternatively, the system may include various different fastener assemblies if desired.

As explained herein, the structures of the system may include any physical object(s). For example, one of the structures may be a platform defining a manway and another one of the structures may be a manway cover for covering the manway. In such examples, the one or more fastener assemblies detachably couple the manway cover to the platform to seal the manway.

### D. Further Embodiments

Embodiment 1. A fastener assembly for detachably coupling two structures together includes a stud configured to couple to a first structure such that the stud extends from the first structure when the stud is coupled to the first structure, a body configured to pivotally couple to a second structure different than the first structure, and a fastener configured to detachably couple to the stud. The body is pivotable between a closed position in which the body is positioned adjacent the stud when coupled to the first structure and an open position in which the body is positioned aside from the first structure. The body defines at least one aperture for receiving the stud when the body is in the closed position. The fastener is configured to force the body against the first structure when the body is in the closed position to detachably couple the first structure to the second structure.

Embodiment 2. The fastener assembly of embodiment 1, wherein the body is pivotally coupled to the second structure via a hinge.

Embodiment 3. The fastener assembly of any one of the previous embodiments, wherein the stud includes threads and wherein the fastener includes threads corresponding to the threads of the stud.

Embodiment 4. The fastener assembly of any one of the previous embodiments, wherein the fastener includes a nut.

Embodiment 5. The fastener assembly of embodiment 4, wherein the nut includes an encapsulating nut.

Embodiment 6. The fastener assembly of embodiment 5, wherein the encapsulating nut defines a reservoir for storing a lubricant.

Embodiment 7. The fastener assembly of any one of the previous embodiments, wherein the stud extends substantially perpendicular from the first structure when the stud is coupled to the first structure.

Embodiment 8. The fastener assembly of any one of the previous embodiments, the body is defined by at least two opposing sides and wherein the at least one aperture includes a channel extending from one of the opposing sides.

Embodiment 9. The fastener assembly of any one of the previous embodiments, further including at least one gasket extending between the first structure and the second structure when the first structure is coupled to the second structure.

Embodiment 10. The fastener assembly of embodiment 9, wherein the body is defined by a top side and a bottom side, the fastener assembly further including a protrusion extending from the bottom side of the body, the protrusion configured to substantially align with the at least one gasket when the body is in the closed position.

Embodiment 11. A system includes a plurality of structures having a first structure and a second structure, and one or more fastener assemblies for detachably coupling the first structure to the second structure. At least one fastener assembly of the one or more fastener assemblies includes a stud coupled to the first structure, a body pivotally coupled to the second structure, and a fastener configured to detachably couple to the stud. The body is pivotable between a closed position in which the body is positioned adjacent the stud and an open position in which the body is positioned aside from the first structure. The body defines at least one aperture for receiving the stud when the body is in the closed position. The fastener is configured to force the body against the first structure when the body is in the closed position to couple the first structure to the second structure.

Embodiment 12. The system of embodiment 11, wherein the stud of the at least one fastener assembly is welded to the first structure.

Embodiment 13. The system of embodiment 11 or 12, wherein the body of the at least one fastener assembly is pivotally coupled to the second structure via a hinge.

Embodiment 14. The system of any one of embodiment 11-13, wherein the stud of the at least one fastener assembly includes threads and wherein the fastener of the at least one fastener assembly includes threads corresponding to the threads of the stud.

Embodiment 15. The system of any one of embodiment 11-14, wherein the fastener includes an encapsulating nut.

Embodiment 16. The system of embodiment 15, wherein the encapsulating nut defines a reservoir for storing a lubricant.

Embodiment 17. The system of any one of embodiment 11-16, wherein the body of the at least one fastener assembly is defined by at least two opposing sides and wherein the at least one aperture of the body includes a channel extending from one of the opposing sides.

Embodiment 18. The system of any one of embodiment 11-17, further including at least one gasket extending between the first structure and the structure when the first structure is coupled to the structure.

Embodiment 19. The system of embodiment 18, wherein the body of the at least one fastener assembly is defined by a top side and a bottom side, the fastener assembly further including a protrusion extending from the bottom side of the body, the protrusion configured to substantially aligned with the gasket when the body is in the closed position.

Embodiment 20. A fastener assembly for detachably coupling two structures together includes a lever configured to pivotably couple to a first structure such that the lever extends from the first structure when the lever is coupled to the first structure, and a stud having a first end and a second end opposing the first end. The first end of the stud is pivotably coupled to the lever and the second end of the stud is configured to couple to a second structure overlapping a portion of a third structure. The lever is pivotable between a closed position in which the stud is compressed against the second structure when the second structure is overlapping the portion of the third structure thereby coupling the third structure and the second structure together, and an open position in which the stud is released from its compressed engagement with the third structure.

Embodiment 21. The fastener assembly of embodiment 20, further comprising an offset pivotably coupled to the lever and wherein the lever is configured to pivotably couple to the first structure via the offset.

Embodiment 22. The fastener assembly of embodiment 21, wherein the lever includes two lever arms extending between the offset and the stud.

Embodiment 23. The fastener assembly of embodiment 22, wherein the lever includes one or more braces coupled between the two lever arms to structurally support the two lever arms.

Embodiment 24. The fastener assembly of any one of embodiment 20-23, wherein the stud includes a compression arm pivotably coupled to the lever and a compression foot configured to compress against the third structure.

Embodiment 25. The fastener assembly of embodiment 24, wherein the compression arm includes two arms extending between the lever and the compression foot.

Embodiment 26. The fastener assembly of embodiment 25, wherein the compression arm includes one or more braces coupled between the two arms to structurally support the two arms.

Embodiment 27. The fastener assembly of any one of embodiment 24-26, wherein the compression foot includes a main body defining a recess and an auxiliary body insertable into the recess of the main body.

Embodiment 28. The fastener assembly of embodiment 27, wherein the auxiliary body is movable relative to the main body.

Embodiment 29. The fastener assembly of embodiment 27 or 28, wherein the recess of the main body includes threads and the auxiliary body includes threads corresponding to the threads of the recess.

Embodiment 30. The fastener assembly of any one of embodiment 27-29, wherein the auxiliary body is movable between an extended position and a recessed position.

Embodiment 31. A system includes a plurality of structures having a first structure, a second structure, and a third structure at least partially overlapping the second structure, and one or more fastener assemblies for detachably coupling the second structure to the third structure. At least one fastener assembly of the one or more fastener assemblies includes a lever pivotably coupled to the first structure, and a stud having a first end and a second end opposing the first end. The first end of the stud pivotably is coupled to the lever and the second end of the stud is configured to couple to the third structure. The lever is pivotable between a closed position in which the stud is compressed against the third structure thereby coupling the third structure and the second structure together, and an open position in which the stud is released from its compressed engagement with the third structure.

Embodiment 32. The system of embodiment 30, the third structure includes a platform and one or more walls extending from the platform to define a target area for the stud when the lever is pivoted into its closed position.

Embodiment 33. The system of any one of embodiment 31 or 32, further comprising at least one gasket extending between the second structure and the third structure.

Embodiment 34. The system of any one of embodiment 31-33, wherein the at least one fastener assembly includes an offset pivotably coupled to the lever and wherein the lever is configured to pivotably couple to the first structure via the offset.

Embodiment 35. The system of any one of embodiment 31-34, wherein the stud of the at least one fastener assembly is extendable between an extended position and a recessed position.

Embodiment 36. The system of any one of embodiment 31-35, wherein the stud of the at least one fastener assembly includes a compression arm pivotably coupled to the lever and a compression foot configured to compress against the third structure.

Embodiment 37. The system of embodiment 36, wherein the compression foot includes a main body defining a recess and an auxiliary body insertable into the recess of the main body and wherein the auxiliary body is movable relative to the main body.

Embodiment 38. The system of embodiment 37, wherein the recess of the main body includes threads and the auxiliary body includes threads corresponding to the threads of the recess.

Embodiment 39. The system of any one of embodiment 31-38, wherein the second structure is coupled to the first structure.

Embodiment 40. A fastener assembly for detachably coupling two structures together includes a stud configured to couple to a first structure such that the stud extends from the first structure when the stud is coupled to the first structure, a body configured to detachably couple to the stud and including a main section defining an aperture for receiving the stud and a plate section extending from the main section, and a fastener configured to detachably couple to the stud for limiting linear movement of the body along the stud. The body is rotatable about the stud between a closed position in which at least a portion of the body is constrained between the fastener and a second structure causing the second structure to press against and couple to the first structure, and an open position in which the body is aside from the second structure.

Embodiment 41. The fastener assembly of embodiment 40, further comprising a base configured to couple to the body, the base including a main portion and a plate portion extending from the main portion.

Embodiment 42. The fastener assembly of embodiment 41, wherein the plate portion of the base defines an aperture and wherein the plate section of the body defines an aperture, the fastener assembly further comprising a fastener positionable in the aperture of the plate portion and the aperture of the plate section for coupling the plate section and the plate portion together.

Embodiment 43. The fastener assembly of embodiment 41 or 42, wherein the base defines an aperture for receiving the stud and wherein the base is rotatable about the stud.

Embodiment 44. The fastener assembly of any one of embodiment 41-43, further comprising a stop configured to couple to the first structure and restrict rotation of the base.

Embodiment 45. The fastener assembly of any one of embodiment 41-44, wherein the main portion of the base is configured to couple to the second structure.

Embodiment 46. The fastener assembly of embodiment 45, wherein the main portion of the base includes opposing surfaces and wherein one of the opposing surfaces includes an incline to receive the plate section of the body thereby forcing the body against the fastener.

Embodiment 47. The fastener assembly of embodiment 45 or 46, wherein the plate section of the body is a first plate section, wherein the body includes a second plate section extending from the main section, and wherein the base is a first base, the fastener assembly further comprising a second base including a main portion and a plate portion extending from the main portion of the second base, the plate portion of the second base configured to couple to the second plate section of the body.

Embodiment 48. The fastener assembly of any one of embodiment 40-47, wherein the fastener includes an encapsulating nut.

Embodiment 49. The fastener assembly of embodiment 48, wherein the encapsulating nut defines a reservoir for storing a lubricant.

Embodiment 50. The fastener assembly of any one of embodiment 40-49, wherein the body is rotatable about the stud between the closed position and the open position without moving the fastener.

Embodiment 51. A system including a plurality of structures having a first structure and a second structure, and one or more fastener assemblies for detachably coupling the first structure to the second structure. At least one fastener assembly of the one or more fastener assemblies includes a stud coupled to the first structure such that the stud extends from the first structure, a body configured to detachably couple to the stud, and a fastener configured to detachably couple to the stud for limiting linear movement of the body along the stud. The body includes a main section defining an aperture for receiving the stud and a plate section extending from the main section. The body is rotatable about the stud between a closed position in which at least a portion of the body is constrained between the fastener and the second structure causing the second structure to press against and couple to the first structure, and an open position in which the body is aside from the second structure.

Embodiment 52. The system of embodiment 51, further comprising a base configured to couple to the body, the base including a main portion and a plate portion extending from the main portion.

Embodiment 53. The system of embodiment 52, wherein the base defines an aperture for receiving the stud and wherein the base is rotatable about the stud.

Embodiment 54. The system of embodiment 52 or 53, wherein the main portion of the base is configured to couple to the second structure.

Embodiment 55. The system of any one of embodiment 52-54, wherein the main portion of the base includes opposing surfaces and wherein one of the opposing surfaces includes an incline to receive the plate section of the body thereby forcing the body against the fastener.

Embodiment 56. The system of any one of embodiment 52-55, wherein the plate section of the body is a first plate section, wherein the body includes a second plate section extending from the main section, and wherein the base is a first base, the fastener assembly further comprising a second base including a main portion and a plate portion extending from the main portion of the second base, the plate portion of the second base configured to couple to the second plate section of the body.

Embodiment 57. The system of any one of embodiment 51-56, wherein the body is rotatable about the stud between the closed position and the open position without moving the fastener.

Embodiment 58. The system of any one of embodiment 51-57, further comprising at least one gasket extending between the first structure and the second structure.

Embodiment 59. The system of any one of embodiment 51-58, wherein the fastener includes an encapsulating nut defining a reservoir for storing a lubricant.

### EXAMPLES

The following examples embodiments are merely illustrative, and do not limit this disclosure in any way.

The example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

### Example 1: The Fastener Assembly of Figures 1A and 1B

A fastener assembly for detachably coupling two structures together according to one example embodiment of the present disclosure is illustrated in Figs. 1A and 1B and indicated generally by reference number 100. As shown, the fastener assembly 100 may be used in and/or adjacent to a system including the structures 104, 108, and/or other suitable structures.

As shown in Figs. 1A and 1B, the fastener assembly 100 includes a stud 102 coupled to the structure 104, a body 106 pivotally coupled to the other structure 108, and a fastener 110 detachably coupled to the stud 102. The body 106 is pivotable between a closed position in which the body 106 is positioned adjacent the stud 102 (as shown in Fig. 1A) and an open position in which the body 106 is positioned aside from the structure 104 (as shown in Fig. 1B). The fastener 110 can force the body 106 against the structure 104 when the body 106 is in the closed position to detachably couple the structures 104, 108 together.

The body 106 can be manipulated differently to couple the structures 104, 108 together and/or to separate the structures 104, 108. In the example of Figs. 1A and 1B, a user can force the body 106 to pivot between its closed and open positions to couple and/or separate the structures 104, 108. For example, the user can move the body 106 into its closed position such that the body 106 compresses the structures 104, 108 together thereby coupling the structures 104, 108 together. If desired, the user can move the body 106 into a substantially open position so enough clearance exists to allow the user to separate the structures 104, 108.

As shown in Figs. 1A and 1B, the body 106 includes a base 120 coupled to the structure 108 and a platform 122 pivotally coupled to and extending from the base 120. For example, the body 106 may include a hinge assembly coupled between the base 120 and the platform 122. Thus, the body 106 may be pivotally coupled to the structure 108 via a hinge.

In such examples, the base 120 and/or the platform 122 can include corresponding protuberance(s), recess(es), etc. designed for receiving a pin 124 (e.g., a removable pin such as a clevis pin, etc.) to pivotally couple the platform 122 to the base 120. As such, the platform 122 can pivot about the pin 124 when a force (e.g., user applied force, gravity, etc.) is applied to the platform 122 thereby allowing the body 106 to pivot between its closed position and its open position, as explained above. This allows the platform 122 to act as a moment arm when a force is applied.

Alternatively, the body 106 can include other suitable components to pivotally couple the platform 122 to the base 120. For example, the body 106 may include a ball and socket assembly coupled between the base 120 and the platform 122, etc.

In some embodiments, the base 120 can be used as an offset. For example, the base 120 of Figs. 1A and 1B extends from the structure 108 to ensure the platform 122 is substantially flush (and in some cases substantially parallel) with the structure 104 when the body 106 is in its closed position. In such examples, the base 120 (e.g., not including protuberance(s), recess(es), etc. explained above) can have a length substantially equal to a width of the structure 104. Alternatively, the base 120 can have another suitable length such that the platform is not substantially flush with the structure 104 when the body 106 is in its closed position.

The base 120 may be coupled to the structure 108 by any suitable manner. For example, the base 120 can be welded to the structure 108 to provide, for example, structural rigidity. Additionally or alternatively, the base 120 may be coupled to the structure 108 via one or more adhesives, mechanical devices such as such rivets, bolts, screws, etc.

The body 106 can define an aperture for receiving the stud 102 when the body 106 is in its closed position. For example, and as shown in Figs. 1A and 1B, the platform 122 of the body 106 includes multiple sides (e.g., sides 114, 116, 118, etc.) and an aperture 112 extending between the sides 114, 116. In some embodiments, the aperture 112 can extend from one or more other sides of the platform 122. For example, the aperture 112 may additionally extend from the side 118, a side opposing the side 118, etc. In such examples, the aperture 112 may be considered a channel.

The aperture 112 may be sized to ensure the body 106 can be pivoted into its closed position. For example, the aperture 112 may have an area slightly larger than a cross sectional area of the stud 102 so the body 106 can be positioned over the stud 102. In other examples, the area of the aperture 112 may be larger to provide a tolerance for the stud 102. Thus, even if the stud 102 differs from a standard position (e.g., alignment, etc.), size, shape, etc. and/or the stud 102 has moved due to, for example, thermal conditions, the body 106 can still be positioned over the stud 102 if the stud 102 falls within the tolerance.

In some embodiments, the body 106 may include one or more apertures in addition to the aperture 112. This may assist the body 106 in receiving a stud (e.g., the stud 102, etc.) if the stud differs from a standard position, additional studs extending from the structure 104, etc.

The stud 102 can extend from the structure 104 at various angles. For example, and as shown in Figs. 1A and 1B, the stud 102 extends substantially perpendicular from the structure 104. Alternatively, the stud 102 can extend from the structure 104 at another suitable angle including, for example, about fifteen degrees, about thirty degrees, about forty-five degrees, about sixty degrees, about seventy degrees, etc. The angle between the stud 102 and the structure 104 may depend on various factors including, for example, design requirements, available space, ease of installation, etc.

The stud 102 can be coupled to the structure 104 at any suitable location. For example, the stud 102 can be coupled to the structure 104 at a defined distance from an edge of the structure 104. The defined distance can be determined based on, for example, the size, shape, etc. of the body 106 including its aperture 112, etc.

The stud 102 can be coupled to the structure 104 by many different techniques. For example, the stud 102 of Figs. 1A and 1B is welded to the structure 104. Additionally or alternatively, the stud 102 can be coupled to the structure 104 via one or more adhesives, mechanical devices such as such rivets, bolts, screws, etc.

As shown in Figs. 1A and 1B, the stud 102 is the only stud extending from the structure 104. Alternatively, more than one stud can extend from the structure 104 if desired. For example, in some embodiments, three studs can extend from the structure 104 in a particular or random pattern. The additional studs may provide increased security measures, for example, redundancy if one of the studs, fasteners, etc. fails, etc.

The fastener 110 can be any suitable fastener which detachably couples to the stud 102 and latches the body 106 into a compression relationship with the structures 104, 108. For example, and as shown in Figs. 1A and 1B, the fastener 110 can include one or more mechanical devices such as a clamp, a nut (e.g., acorn nut, etc.), etc. In some embodiments, and as further explained below, the fastener 110 and/or the stud 102 may include corresponding threads for assisting in coupling and/or decoupling the fastener 110 to and/or from the stud 102. Additionally or alternatively, the fastener can include one or more adhesives if desired.

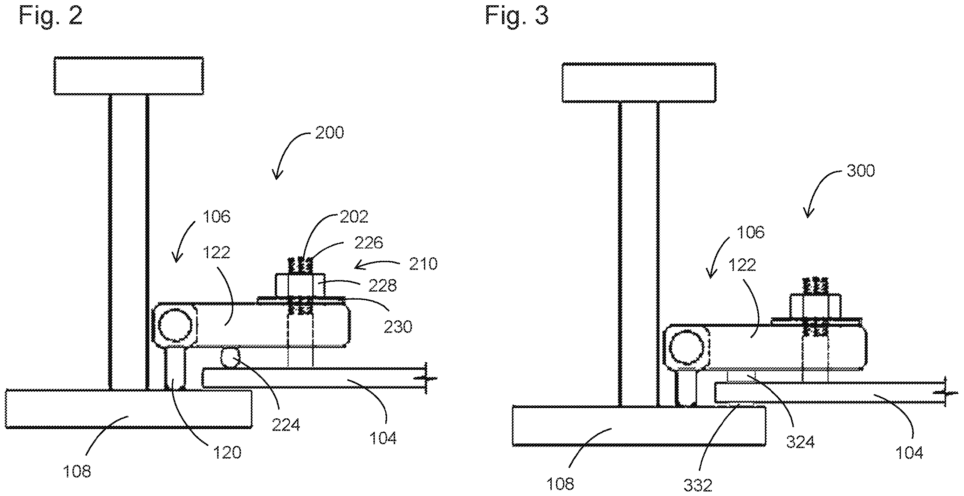

### Example 2: The Fastener Assembly of Figure 2

Fig. 2 illustrates another example fastener assembly 200 that may be used in and/or adjacent to a system including the structures 104, 108 and/or other suitable structures. As shown, the fastener assembly 200 is substantially similar to the fastener assembly 100 of Figs. 1A and 1B, but including a protrusion positioned between the body 106 and the structure 104 of Figs. 1A and 1B. For example, and as shown in Fig. 2, the fastener assembly 200 includes a protrusion 224 extending from the body 106. More specifically, the protrusion 224 extends from a bottom side of the body's platform 122.

The protrusion 224 can provide a point of contact with the structure 104. For example, and as shown in Fig. 2, the protrusion 224 aligns with overlapping portions of the structures 104, 108. As such, when a force is applied to the body 106 (as explained above), this force is substantially concentrated on the aligned protrusion 224 and overlapping portions of the structures 104, 108 thereby compressing the structures 104, 108 together.

The protrusion 224 of Fig. 2 may form a spherical shape, a tubular shape, or another suitable shape. For example, and as shown in Fig. 2, the protrusion 224 includes a substantially circular cross sectional shape. Alternatively, the protrusion 224 may have another suitable cross sectional shape including, for example, a rectangular cross sectional shape, a triangular cross sectional shape, etc.

As shown in Fig. 2, the platform 122 is substantially parallel to, but not flush with, the structure 104. For example, the protrusion 224 provides an offset between the platform 122 and the structure 104. This parallel, but not flush, configuration may be due to, for example, the protrusion 224, the size of the base 120, the flexibility of the platform 122, etc.

Additionally, the fastener assembly 200 includes a stud 202 and a fastener 210 substantially similar to the stud 102 and the fastener 110 of Figs. 1A and 1B, but the stud 202 and the fastener 210 of Fig. 2 include threads. For example, and as shown in Fig. 2, the stud 202 includes threads 226 and the fastener 210 includes threads (not shown) corresponding to the threads 226. As such, a torque can be applied to the fastener 210 to tighten the fastener 210 against the body 106 causing the structures 104, 108 to compress together, and/or to loosen the fastener 210. In such examples, a user can also make fine adjustments (if necessary) with the threaded stud 202 and fastener 210 after the fastener 210 is substantially tighten, over tighten, etc.

As shown in Fig. 2, the fastener 210 includes a nut 228 and a washer 230 coupled between the nut 228 and the platform 122. The nut 228 may include, for example, an acorn nut and/or another suitable nut. In some embodiments, the fastener 210 may include one or more additional nuts and/or different fastening devices.

The washer 230 of Fig. 2 includes a disk-shaped plate defining an aperture. The aperture may have an area larger (e.g., slightly larger, etc.) than a cross sectional area of the stud 202 while the plate may have a perimeter extending beyond the aperture (not shown) of the body 106. In such examples, the washer 230 may be considered an oversized washer. Additionally or alternatively, the washer 230 can include one or more clamping mechanisms, locking mechanisms, etc. if desired.

### Example 3: The Fastener Assembly of Figure 3

Fig. 3 illustrates yet another example fastener assembly 300 that may be used in and/or adjacent to a system including the structures 104, 108 and/or other suitable structures. As shown, the fastener assembly 300 is substantially similar to the fastener assembly 200 of Fig. 2, but including a gasket 332 extending between the structures 104, 108. The gasket 332 may assist in providing a seal between the structures 104, 108. For example, if the structures 104, 108 are not completely flush with each other, the gasket 332 may be placed between the structures 104, 108. When a force is applied to the body 106 (as explained above), the platform 122 can force the structure 104 to compress the gasket 332 against the structure 108 thereby creating a seal between the structures 104, 108.

Additionally, the fastener assembly 300 includes a protrusion 324 substantially similar to the protrusion 224 of Fig. 2, but having a different shape. For example, and as shown in Fig. 3, the protrusion 324 includes a rectangular cross sectional shape.

As shown in Fig. 3, the protrusion 324 extends from a bottom side of the body 106 (e.g., a bottom side of the platform 122) and is substantially aligned with the gasket 332. In particular, the protrusion 324 and the gasket 332 are substantially aligned in a plane extending substantially perpendicular to the structure 104. The protrusion 324 and the gasket 332 are also aligned with overlapping portions of the structures 104, 108, as explained above. As such, when the body 106 is in its closed position and a force is applied to the body 106, this force is substantially concentrated on the aligned protrusion 324, gasket 332, and overlapping portions of the structures 104, 108 thereby compressing the gasket 332 between the structures 104, 108, as explained above.

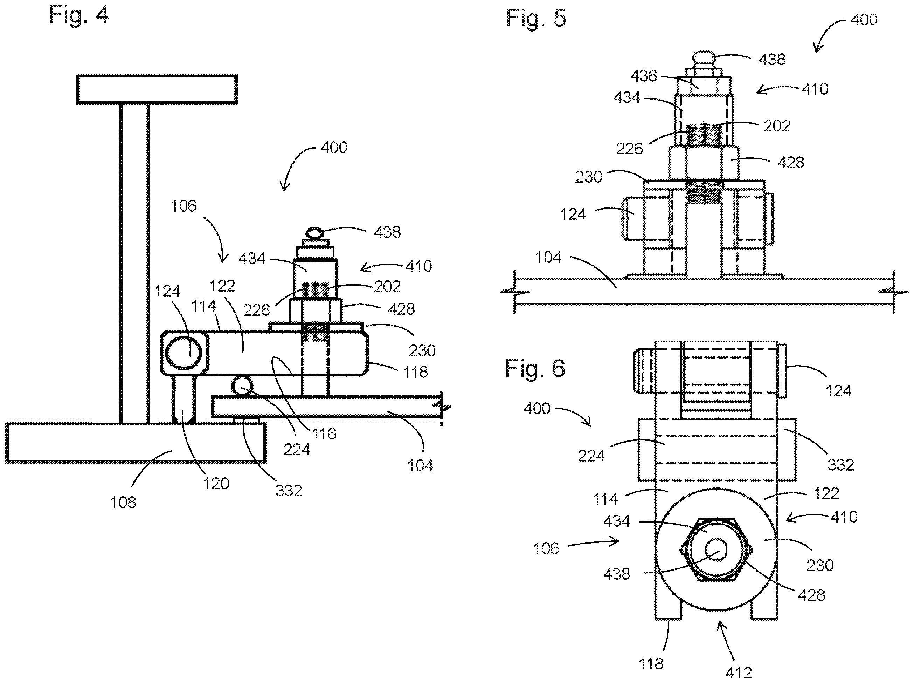

### Example 4: The Fastener Assembly of Figures 4-6

Figs. 4-6 illustrate another example fastener assembly 400 that may be used in and/or adjacent to a system including the structures 104, 108 and/or other suitable structures. As shown, the fastener assembly 400 is substantially similar to the fastener assembly 200 of Fig. 2 and the fastener assembly 300 of Fig. 3, but including a different fastener 410 detachably coupled to the stud 202. For example, the fastener 410 of Figs. 4-6 includes an encapsulating nut having a nut portion 428 for detachably coupling to the threads 226 of the stud 202, the washer 230 of Fig. 2 coupled to the nut portion 428, and an encapsulating portion 434 coupled to the nut portion 428.

As explained above, the fastener 410 can force the body 106 against the structure 104 when the body 106 is in its closed position to detachably couple the structure 104, 108 together. For example, the platform 122 of the body 106 can pivot about the pin 124 and be forced downward causing the protrusion 224 to press against the structure 104 thereby compressing the gasket 332, as explained above. At least some of this downward force can be applied by a user rotating the fastener 410 onto the stud 202.

The encapsulating portion 434 of the encapsulating nut fastener 410 surrounds at least a portion of the stud 202. Thus, when the encapsulating nut fastener 410 is installed, the portion of the stud 202 surrounded by the encapsulating portion 434 is not exposed to external contaminants (e.g., debris, fluids contained by and/or adjacent to one or both structures 104, 108, etc.). As such, the encapsulating portion 434 can protect the threads 226 of the stud 202 from galling and/or other undesirable conditions which can lead to increased maintenance time and costs.

Additionally, the encapsulating nut fastener 410 includes a reservoir 436 for storing a lubricant and a cap 438 for covering an input for receiving the lubricant. For example, and as shown in Figs. 4-6, the encapsulating portion 434 of the encapsulating nut defines the reservoir 436 for storing the lubricant. The reservoir 436 may generally extend between the nut portion 428 of the fastener 410 and the input of the fastener 410 (e.g., adjacent the cap 438), and surround at least a portion of the stud 202. As such, when a user inserts lubricant into the reservoir 436 via the input, the lubricant can migrate about at least a portion of the threads 226 of the stud 202. This may lubricate the threads 226 and threads of the nut portion 428 thereby reducing friction between the threads. As a result, a user can remove the fastener 410 from the stud 202 with relative ease.

The cap 438 of the encapsulating nut fastener 410 may be clamped, compressed, screwed, etc. onto the encapsulating portion 434 to cover (e.g., seal, etc.) the lubricant input. For example, the cap 438 and a portion of the encapsulating portion 434 may each include corresponding threads to allow a user to couple and/or decouple the cap 438 to the encapsulating portion 434. In some embodiments, the cap 438 may be a one-time use cap such that a new cap is employed if the cap 438 is removed. Alternatively, the cap 438 may be a multiple use cap.

The encapsulating nut fastener 410 of Figs. 4-6 can be monolithic. For example, the nut portion 428 and the encapsulating portion 434 can be formed of one piece of material. Alternatively, the nut portion 428, the encapsulating portion 434, and/or other components of the encapsulating nut fastener 410 can be formed separately and coupled together.

As shown best in Fig. 6, the body 106 can define an aperture for receiving the stud 102 when the body 106 is in its closed position. For example, the aperture of Fig. 6 includes a channel 412 extending between the opposing sides 114, 116 of the platform 122 and from the side 118 of the platform 122. Thus, even if the stud 202 differs from a standard position, size, shape, etc. and/or has moved due to, for example, thermal conditions, the body 106 can still be positioned over the stud 202 if the stud 202 falls within a tolerance, as explained above.

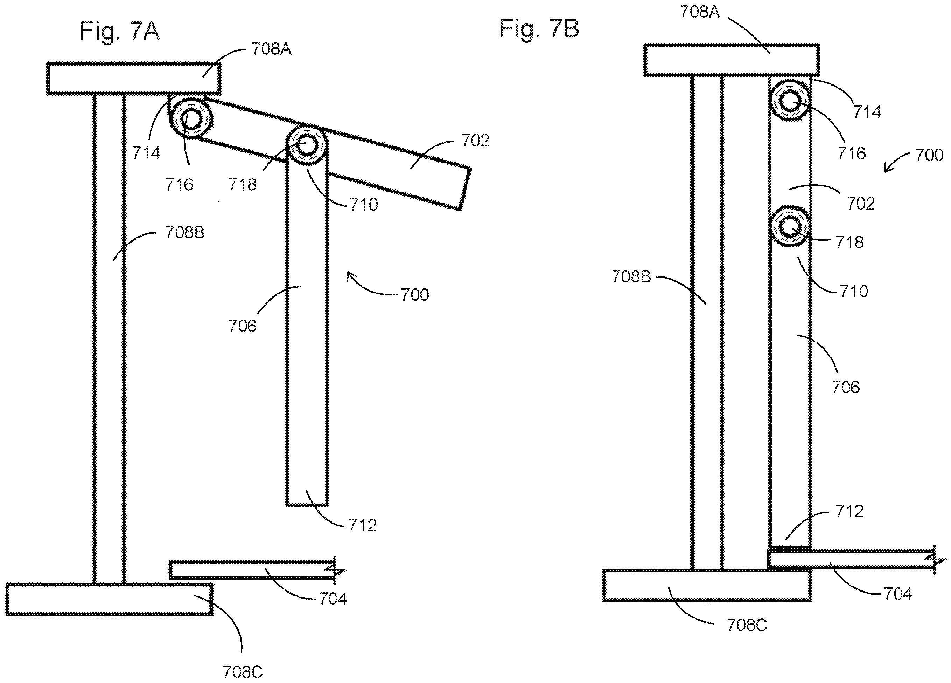

### Example 5: The Fastener Assembly of Figures 7A and 7B

Figs. 7A and 7B illustrate another example fastener assembly 700 for detachably coupling two structures together. As shown, the fastener assembly 700 may be used in and/or adjacent to a system including the structure 704 and the structures 708A, 708B, 708C (e.g., collectively the structure 708), and/or other suitable structures.

As shown in Figs. 7A and 7B, the fastener assembly 700 includes a lever 702 pivotably coupled to the structure 708A, and a stud 706 including opposing ends 710, 712. The end 710 is pivotably coupled to the lever 702 and the end 712 is configured to couple to the structure 704 overlapping at least a portion of the structure 708C.

The lever 702 is pivotable between a closed position in which the stud 706 is compressed against the structure 704 thereby coupling the structures 704, 708C together (as shown in Fig. 7B) and an open position in which the stud 706 is released from its compressed engagement with the structure 704 (as shown in Fig. 7A). Thus, the lever 702 can be manipulated differently to couple the structures 704, 708C together and/or to separate the structures 704, 708C.

For example, a user can manipulate the lever 702 such that the lever 702 pivots between its closed and open positions to couple and/or separate the structures 704, 708C. As shown in Fig. 7B, the lever 702 can be moved to its closed position to compress and couple the structures 704, 708C together. In such examples, the stud 706 is positioned against the structure 704 and the lever 702 is manipulated (e.g. forcibly rotated downward, etc.) to align with the stud 706 thereby compressing the structures 704, 708C together. If desired, the lever 702 can be moved to a substantially open position (e.g., forcibly rotated upward, etc.) so enough clearance exists to allow the user to separate the structures 704, 708C.

As shown in Figs. 7A and 7B, the structures 708A, 708C are coupled together to form an I-beam like structure. In particular, the structure 708A is coupled to the structure 708C via another structure 708B. In other examples, the structures 708A, 708B, 708C may be coupled together to form another suitable structure such as another beam like structure, walls of an enclosure, etc. Alternatively, the structures 708A, 708C may not be coupled together. For example, the structure 708A may be a portion of one beam like structure, enclosure, etc. and the structure 708C may be portion of another separate beam like structure, enclosure, etc.

In the example of Figs. 7A and 7B, the lever 702 is coupled to the structure 708A via an offset 714 (sometimes referred to herein as a base 714). In particular, the offset 714 is coupled (e.g., welded, etc.) to the structure 708A and pivotably coupled to the lever 702. For example, the offset 714 may be pivotably coupled to the lever 702 via a hinge assembly, as shown in Figs. 7A and 7B. This allows the lever 702 to move relative to the offset 714 (and therefore the structure 708A).

In such examples, the offset 714 and/or the lever 702 can include corresponding protuberance(s), recess(es), etc. designed for receiving a pin 716 (e.g., a removable pin, etc.) to pivotally couple the lever 702 to the base 714. This allows the lever 702 to pivot about the pin 716 when a force (e.g., user applied force, gravity, etc.) is applied to the lever 702, and therefore move between its closed position (Fig. 7B) and its open position (Fig. 7A), as explained above.

In some embodiments, the lever 702 can include one or more features to assist in grasping and manipulating the lever. For example, the lever 702 can include one or more depressions and/or protrusions to increase a user's grip on the lever 702. Additionally or alternatively, the lever 702 can include one or more sleeves, patches and/or other suitable grasping devices on at least a portion of the lever to increase a user's grip on the lever 702.

As explained above, the stud 706 is pivotably coupled to lever 702. For example, the stud 706 may be pivotably coupled to the lever 702 via a hinge assembly similar to the hinge assembly between the base 714 and the lever 702. In such examples, the stud 706 and/or the lever 702 can include corresponding protuberance(s), recess(es), etc. designed for receiving a pin 718 (e.g., a removable pin, etc.) to pivotally couple the stud 706 to the lever 702. As such, the stud 706 can move (e.g., swing, etc.) relative to the lever 702. This allows a user to position the end 712 of the stud 706 on and/or adjacent a particular location of the structure 704 before and/or when the lever 702 is moved into its closed position.

In the example embodiment of Figs. 7A and 7B, the lever 702 and the stud 706 each include a single member. Alternatively, and as further explained below, the lever 702 and/or the stud 706 may include additional members such as two or more parallel extending members coupled together, member(s) having extendable portions, etc.

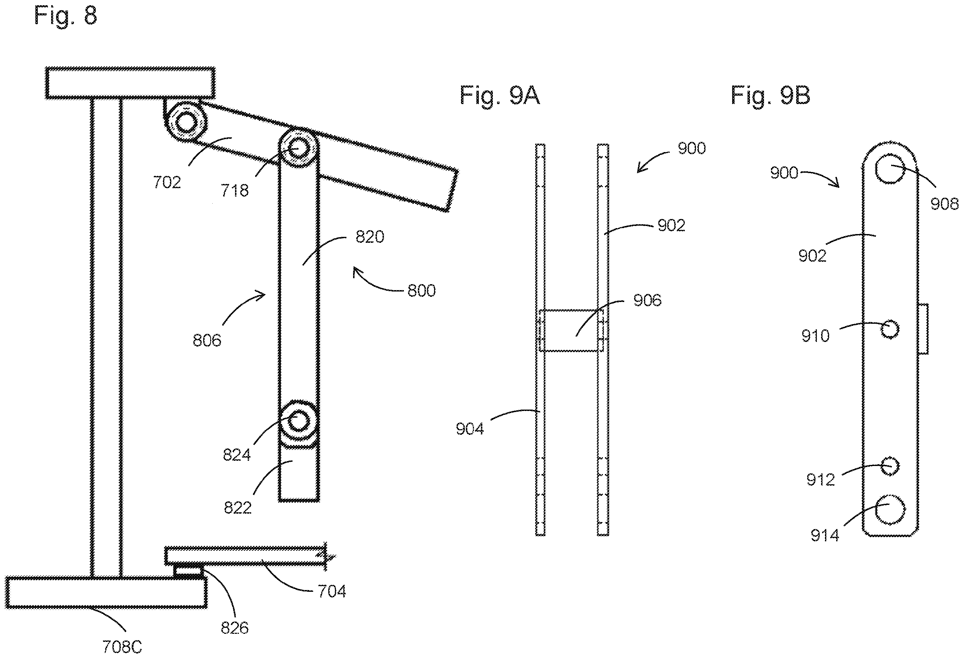

### Example 6: The Fastener Assembly of Figure 8

Fig. 8 illustrates yet another example fastener assembly 800 that may be used in and/or adjacent to a system including the structures 704, 708 and/or other suitable structures. As shown, the fastener assembly 800 is substantially similar to the fastener assembly 700 of Figs. 7A and 7B, but including a different stud. For example, and as shown in Fig. 8, the fastener assembly 800 includes a stud 806 coupled to the lever 702 via the hinge assembly (e.g., the pin 718), as explained above. The stud 806 includes a compression arm 820 pivotably coupled to the lever 702 and a compression foot 822 coupled to the compression arm 820. The compression foot 822 can compress against the structure 704 when the lever 702 is moved into its closed position, as explained above.

The compression foot 822 can provide an extension for the stud 806. For example, the compression foot 822 can be detachably coupled to the compression arm 820 via a pin 824 (e.g., a removable pin, etc.). In such examples, the compression foot 822 can be coupled to the compression arm 820 and later removed if a longer or shorter compression foot is required. As such, the compression foot 822 and/or other suitable compression feet having different lengths can be coupled to the compression arm 820 to accommodate different structures, specifications, etc.

Advantageously, the compression foot 822 is rigidly coupled to the compression arm 820. For example, two or more pins including the pin 824 may be coupled between the compression foot 822 and the compression arm 820. As such, the compression foot 822 does not move relative to the compression arm 820 when the pins are installed. Instead, the compression foot 822 and the compression arm 820 move in unison.

Alternatively, in some embodiments the compression foot 822 can be movable relative to the compression arm 820. For example, the compression foot 822 may be pivotably coupled to the compression arm 820. In such examples, when the pin 824 is installed, the compression foot 822 may pivot relative to the compression arm 820. This may allow a user greater flexibility in positioning the stud 806 on and/or adjacent a particular location of the structure 704 before and/or when the lever 702 is moved into its closed position, as explained above. Additionally, this configuration allows a user to move the compression foot 822 into an overlapping position with the compression arm 820 (e.g., into a stowed position) if desired.

Additionally, the fastener assembly 800 may include one or more gaskets to assist in sealing the structures 704, 708C, as explained herein. For example, the fastener assembly 800 includes a gasket 826 substantially similar to the gasket 332 of Fig. 3. The gasket 826 extends between the structure 704 and the structure 708C. Thus, when a force is applied to the lever 702, the stud 806 (e.g., the compression foot 822) can force the structure 704 to compress the gasket 826 against the structure 708C thereby creating a seal between the structures 704, 708C.

### Example 7: The Compression Arm of Figures 9A and 9B

Figs. 9A and 9B illustrate an example compression arm 900 employable in the fastener assemblies disclosed herein including, for example, the fastener assembly 700 of Figs. 7A and 7B and the fastener assembly 800 of Fig. 8. As shown, the compression arm 900 includes two arms 902, 904 that extend between a lever (e.g., the lever 702 of Fig. 8) and a compression foot (e.g., the compression foot 822 of Fig. 8), and a brace 906 coupled between the arms 902, 904 to structurally support the arms. For example, the brace 906 can provide a support between the arms 902, 904 to ensure the arms are rigidly coupled together.

As shown, the brace 906 is positioned on a backside of the compression arm 900 and extends from an edge of the arm 902 to an edge of the arm 904 such that the brace 906 overlaps at least a portion of the arms 902, 904. Alternatively, the brace 906 may extend between interior sides of the arms 902, 904, be positioned on the other side of the compression arm 900, etc. if desired.

The brace 906 may include various suitable shapes. For example, and as shown in Fig. 9A, the brace 906 includes a substantially plate-like shape. Alternatively, the brace 906 may include another suitable shape such cylindrical, rectangular, etc. if desired.

In the particular example of Figs. 9A and 9B, the compression arm 900 includes one brace 906 coupled between the arms 902, 904. It should be apparent that the compression arm 900 can include no braces, a different brace, and/or additional braces similar to and/or different from the brace 906 may be employed without departing from the scope of the disclosure.

As shown in Fig. 9A, the arms 902, 904 of the compression arm 900 extend substantially parallel with each other when the brace 906 is coupled between the arms. In other embodiments, the arms 902, 904 may not be parallel if desired depending on, for example, design specifications, etc.

The arms 902, 904 may define one or more apertures. For example, and as shown in Fig. 9B, the arm 902 defines four apertures 908, 910, 912, 914 extending between opposing sides of the arm 902. The apertures 908, 914 may each receive a pin (e.g., the pin 718 of Fig. 7A, the pin 824 of Fig. 8, etc.) for pivotally coupling the compression arm 900 to another component such as a lever, a compression foot, etc., as explained above.

The aperture 910 may be used to secure the compression arm 900 in a particular position relative to a lever. For example, if a lever is coupled to the compression arm 900, the aperture 910 may receive a pin (e.g. a removable pin, etc.) that restricts movement of the compression arm 900 relative to the lever.

The aperture 912 may be used for secure a compression foot at a particular position relative to the arm 902. For example, if a compression foot is coupled to the arm 902 via a pin (as explained above), the aperture 912 may receive another pin (e.g. a removable pin, etc.) that restricts the compression foot from moving relative to the arm 902, secures the compression foot at a particular position (e.g., a stowed position), etc., as explained above.

Additionally, although not shown, the arm 904 may include similar positioned apertures as the arm 902.

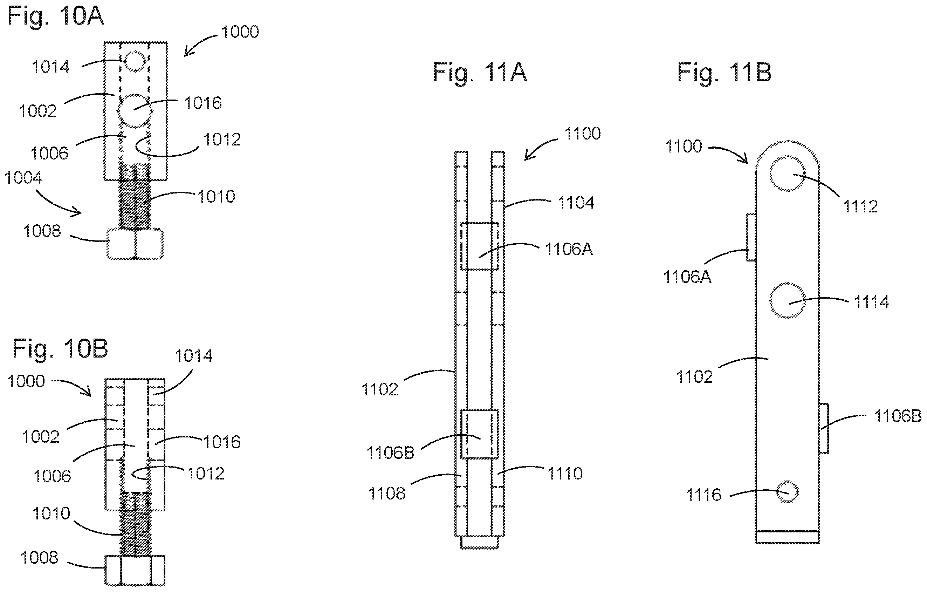

### Example 8: The Compression Foot of Figures 10A and 10B

Figs. 10A and 10B illustrate an example compression foot 1000 employable in the fastener assemblies disclosed herein including, for example, the fastener assembly 700 of Figs. 7A and 7B and the fastener assembly 800 of Fig. 8. As shown, the compression foot 1000 includes a main body 1002 and an auxiliary body 1004 detachably coupled to the main body 1002. For example, the main body 1002 of Figs. 10A and 10B defines a recess 1006 extending from a bottom side of the main body 1002. The auxiliary body 1004 can be inserted into the recess 1006 and therefore coupled to the main body 1002.

The auxiliary body 1004 can be movable relative to the main body 1002. For example, the auxiliary body 1004 can move between an extended position and a recessed position to increase and/or decrease the length of the auxiliary body 1004 (and therefore the compression foot 1000). In some embodiments, this movement of the auxiliary body 1004 can allow a user to finely adjust the length of a stud including the compression foot 1000.

This movement of the auxiliary body 1004 can be realized using various different features. For example, in the particular example of Fig. 10A, the auxiliary body 1004 includes a bolt like structure having a head 1008 and a threaded protrusion 1010. Likewise, the recess 1006 of the main body 1002 includes threads 1012 corresponding to the threads of the protrusion 1010. As such, the auxiliary body 1004 can be rotated to move the auxiliary body 1004 between its extended position and its recessed position, remove the auxiliary body 1004 from the main body 1002, etc. Alternatively, the auxiliary body 1004 may include another suitable feature to allow the auxiliary body 1004 to move relative to the main body 1002.

The main body 1002 may define one or more apertures (e.g., in addition to the recess 1006). For example, and as shown in Figs. 10A and 10B, the main body 1002 defines two apertures 1014, 1016 extending between opposing sides of the main body 1002. The apertures 1014, 1016 may be used for coupling the compression foot 1000 to a compression arm (e.g., the compression arm 900 of Figs. 9A and 9B).

For example, the aperture 1016 may be substantially aligned with the aperture 914 of Fig. 9B to allow a pin (e.g., the pin 824 of Fig. 8, etc.) to be inserted into the apertures 914, 1016 to pivotally couple the compression foot 1000 to the compression arm 900. Likewise, the aperture 1014 may be substantially aligned with the aperture 912 of Fig. 9B to allow a pin to be inserted into the apertures 912, 1014 to restrict movement of the compression foot 1000 relative to the arm 902, secure the compression foot 1000 at a particular position, etc., as explained above.

As shown in Figs. 10A and 10B, the recess 1006 extends an entire length of the main body 1002. Alternatively, the recess 1006 may extend a distance less than the entire length of the main body 1002 depending on, for example, the length of the auxiliary body 1004, etc. For example, the recess 1006 may extend to the aperture 1016, the aperture 1014, etc.

Additionally, and as shown in Figs. 10A and 10B, the threads 1012 of the recess 1006 extend between the bottom side of the main body 1002 and the aperture 1016. Alternatively, the threads 1012 can extend from the bottom side of the main body 1002 to a location below the aperture 1016, if desired.

### Example 9: The Lever of Figures 11A and 11B

Figs. 11A and 11B illustrate an example lever 1100 employable in the fastener assemblies disclosed herein including, for example, the fastener assembly 700 of Figs. 7A and 7B and the fastener assembly 800 of Fig. 8. As shown, the lever 1100 includes two lever arms 1102, 1104 and two braces 1106A, B coupled between the lever arms 1102, 1104 to structurally support the lever arms. When employed, the lever arms 1102 of the lever 1100 can extend between a structure (e.g., the structure 708A of Figs. 7A and 7B), an offset (e.g., the offset 714 of Figs. 7A and 7B), etc. and a stud (e.g., the stud 706 of Figs. 7A and 7B).

The braces 1106A, B of Figs. 11A and 11B may be substantially similar to the brace 906 of Figs. 9A and 9B. For example, the braces 1106A, B may include a similar shape, configuration, etc. as the brace 906 of Figs. 9A and 9B.

As shown, the braces 1106A, B are positioned on opposing sides of the lever 1100. For example, the brace 1106A is positioned on a backside of the lever 1100 and the brace 1106B is positioned on a front side of the lever 1100, as shown in Fig. 11A. Alternatively, both braces 1106A, 1106B may be positioned on one side of the lever 1100 if desired.

Additionally, although the lever 1100 includes two braces 1106, it should be apparent that the lever 1100 can include more or less braces (including no braces) similar to and/or different from the braces 1106 without departing from the scope of the disclosure.

Further, and as shown in Fig. 11A, the lever arms 1102, 1104 extend substantial parallel with each other when the braces 1106 are employed. In other embodiments, the lever arms 1102, 1104 may not be parallel if desired depending on, for example, design specifications, etc.

In some embodiments, the lever arms 1102, 1104 may define one or more apertures. For example, and as shown in Fig. 11B, the lever arm 1102 defines three apertures 1112, 1114, 1116 extending between opposing sides of the lever arm 1102. The apertures 1112, 1114 may each receive a pin (e.g., the pin 716 of Fig. 7A, the pin 718 of Fig. 7A, etc.) for pivotally coupling the lever 1100 to another component such as an offset, a stud, etc., as explained above.

The aperture 1116 may be used to secure the lever 1100 in a particular position relative to a stud. For example, if a stud is coupled to the lever 1100, the aperture 1116 may receive a pin (e.g. a removable pin, etc.) that restricts movement of the lever 1100 relative to the stud.

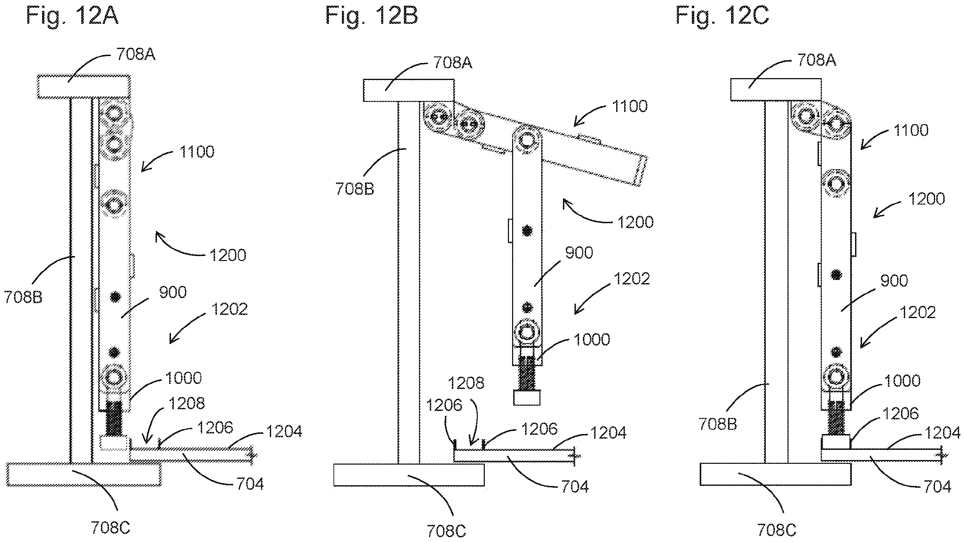

### Example 10: The Fastener Assembly of Figures 12A-12C

Figs. 12A-12C illustrate another example fastener assembly 1200 that may be used in and/or adjacent to a system including the structures 704, 708. For example, the fastener assembly 1200 can detachably couple the structures 704, 708C together, as explained herein.

As shown in Figs. 12A-12C, the fastener assembly 1200 includes the lever 1100 of Figs. 11A and 11B, and a stud 1202 having the compression arm 900 of Figs. 9A and 9B pivotably coupled to the lever 1100 and the compression foot 1000 of Figs. 10A and 10B for coupling to the structure 704, as explained above. The lever 1100 can be coupled to the structure 708A via, for example, a base (e.g., the base 714 of Figs. 7A and 7B), as explained above.

The structure 704 may include a desirable location for receiving the compression foot 1000 when the lever 1100 is moved into its closed position. In some embodiments, this desirable location can include one or more indicators, guides, etc. For example, as shown best in Figs. 12A and 12B, the structure 704 includes a platform 1204 and walls 1206 extending from the platform 1204. The walls 1206 define a target area 1208 for the compression foot 1000 of the stud 1202 when the lever 1100 is pivoted into its closed position.

The fastener assembly 1200 may be moved into different positions. For example, when the lever 1100 is in its open position, the fastener assembly 1200 may be moved into a stowed position remote from the structure 704, as shown in Fig. 12A. Thus, when the fastener assembly 1200 is in its stowed position, the lever 1100 and the stud 1202 can be adjacent (and in some cases aligned with) the structure 708B. This can ensure clearance exists between the fastener assembly 1200 and the structure 704 to allow a user to separate the structures 704, 708C, etc.

Additionally or alternatively, the fastener assembly 1200 can be moved into a decoupled position. For example, when the lever 1100 is movable in its open position, the stud 1202 can be moved adjacent to the target area 1208, as shown in Fig. 12B. Additionally, a length of the compression foot 1000 may be adjusted during this time if desired.

Additionally or alternatively, the fastener assembly 1200 can be moved into a coupled position. For example, and as shown in Fig. 12C, when the lever 1100 is moved into its closed position, the compression foot 1000 is placed in the target area 1208 and the lever 1100 is manipulated (e.g. forced downward, etc.) to align with the stud 1202 thereby coupling the structures 704, 708C together, as explained above.

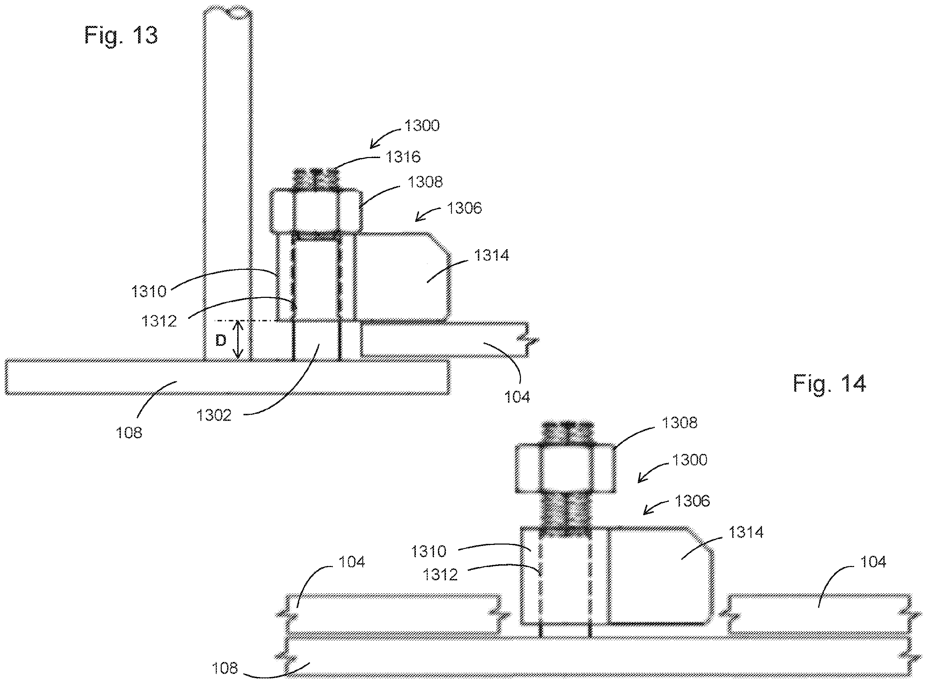

### Example 11: The Fastener Assembly of Figures 13-14

Figs. 13-14 illustrate another example fastener assembly 1300 that may be used in and/or adjacent to a system including, for example, the structures 104, 108 of Fig. 1, the structures 704, 708C of Fig. 7, etc. In the particular example of Figs. 13-14, the fastener assembly 1300 is used to detachably couple the structures 104, 108 together.

As shown in Figs. 13-14, the fastener assembly 1300 includes a stud 1302 coupled to the structure 108 such that the stud 1302 extends from the structure 108, a body 1306 detachably coupled to the stud 1302 and a fastener 1308 detachably coupled to the stud 1302. The fastener 1308 limits linear movement of the body 1306 along the stud 1302. The body 1306 includes a main section 1310 defining an aperture (e.g., a channel, etc.) 1312 for receiving the stud 1302 and a plate section 1314 extending from the main section 1310.

The body 1306 is rotatable about the stud 1302 between a closed position (as shown in the Fig. 13) and an open position (as shown in Fig. 14). When a user rotates the body 1306 to its closed position (e.g., a constrained, a secured, a locked, etc. position), at least a portion of the body 1306 is constrained between the fastener 1308 and the structure 104 causing the structure 104 to press against and couple to the structure 108.

For example, and as shown in Fig. 13, when the user moves the body 1306 adjacent to the fastener 1308 and rotates the body 1306 about the stud 1302, a portion of the body 1306 can extend over a portion of the structure 104. Specifically, the plate section 1314 of the body 1306 can extend over a portion of the structure 104. Because the fastener 1308 limits movement of the body 1306 in a linear direction, a top surface of the body 1306 (e.g., a portion of the main section 1310) may be in contact with a bottom surface of the fastener 1308, and a bottom surface of the body 1306 (e.g., a portion of the plate section 1314) may be in contact with a top surface of the structure 104. In other words, the body 1306 can be wedged between the fastener 1308 and the structure 104 which may cause a force to act on the structure 104 (if the fastener 1308 is substantially fixed). This force can cause the structure 104 to press against and couple to the structure 108.

When the user rotates the body 1306 to its open position (e.g., a separated, an unsecured, an unlocked, etc. position), the body 1306 is positioned aside from the structure 104. For example, when the body 1306 is rotated to its open position, the plate section 1314 of the body 1306 is moved, and therefore is no longer contacting the structure 104, as shown in Fig. 14. This movement of the body 1306 can remove the body's force acting on the structure 104 thereby allowing a user to decouple the structure 104 from the structure 108.

In some embodiments, the body 1306 is rotatable about the stud 1302 between the closed position and the open position without moving the fastener 1308. For example, the fastener 1308 may be substantially fixed (e.g., temporarily or permanently) at a defined point on the stud 1302. As such, the fastener 1308 can limit linear movement of the body 1306 along a length of the stud 1302 to a defined distance. This defined distance is shown as distance D in Fig. 13.

In such examples, the body 1306 can move linearly up and/or down the stud 1302 between the bottom of the stud 1302 (e.g., a top surface of the structure 108) and the defined point on the stud 1302. As such, the body 1306 can be moved near the defined point on the stud 1302 such that the top surface of the body 1306 is in contact with the bottom surface of the fastener 1308 as explained above. This allows the defined point on the stud 1302 (e.g., the position of the fastener 1308) to act as a pressure threshold for the structures 104, 108 and the body 1306 to ensure the structures 104, 108 are effectively coupled together (if desired) without exerting a potentially damaging amount of pressure on the structures 104, 108 and the body 1306.

As shown, the defined distance D has a length that is about the same as the width of the structure 104. Alternatively, the defined distance can be another suitable distance including a shorter distance or a longer distance depending on, for example, the components used, etc.

In the particular example of Figs. 13 and 14, the stud 1302 and the fastener 1308 are substantially similar to the stud 202 and the fastener 210 of Fig. 2. For example, the stud 1302 includes threads 1316 and the fastener 1308 includes threads (not shown) corresponding to the threads 1316 for detachably coupling the fastener 1308 to the stud 1302. In such examples, the stud 1302 may be considered a bolt and the fastener 1308 may be considered a nut. Alternatively, and similar to the stud 102 and the fastener 110 of Fig. 1, the stud 1302 and/or the fastener 1308 may not include threads if desired. In such examples, the fastener 1308 may be detachably coupled to the stud 1302 via a friction fit and/or in another suitable manner.

The plate section 1314 can be sized and/or shaped as desired. For example, and as shown in Fig. 13, the plate section 1314 can have a length substantially equal to the overlapping portion of the structures 104, 108. This may allow the body's force acting on the structure 104 to spread over this overlapping portion. Additionally, the plate section 1314 can have a particular height to ensure the plate section 1314 is not damaged due to the applied force(s) when the body 1306 is in its closed position. In other embodiments, the plate section 1314 may have different dimensions than as shown in Fig. 13 if desired.

Likewise, the main section 1310 can be sized and/or shaped as desired. For example, the main section 1310 can have a height substantially equal to the height of the plate section 1314 as shown in Figs. 13 and 14. Alternatively, the height of the main section 1310 may be less than the height of the plate section 1314, or less than the height of the plate section 1314 if desired.

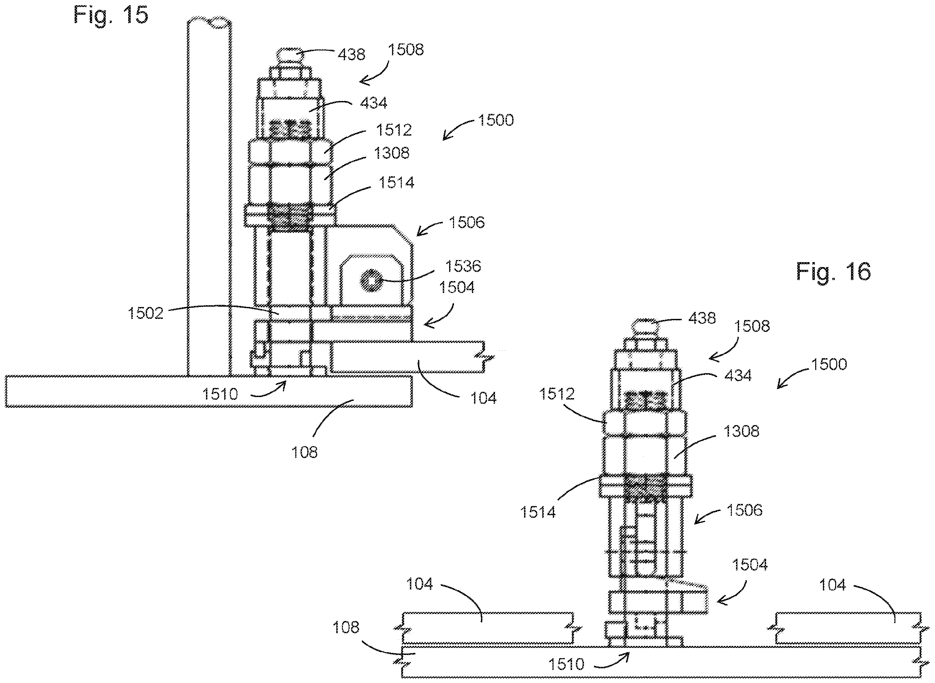

### Example 12: The Fastener Assembly of Figures 15-17

Figs. 15-17 illustrate another example fastener assembly 1500 that may be used in and/or adjacent to a system including, for example, the structures 104, 108 of Fig. 1 (as shown) and/or other suitable structures. As shown, the fastener assembly 1500 is substantially similar to the fastener assembly 1300 of Figs. 13 and 14, but includes a stud 1502, a base 1504 rotatable about the stud 1502, a body 1506 rotatable about the stud 1502, and a fastener system 1508 including the fastener (e.g., a nut) 1308 that can limit linear movement of the body 1506.

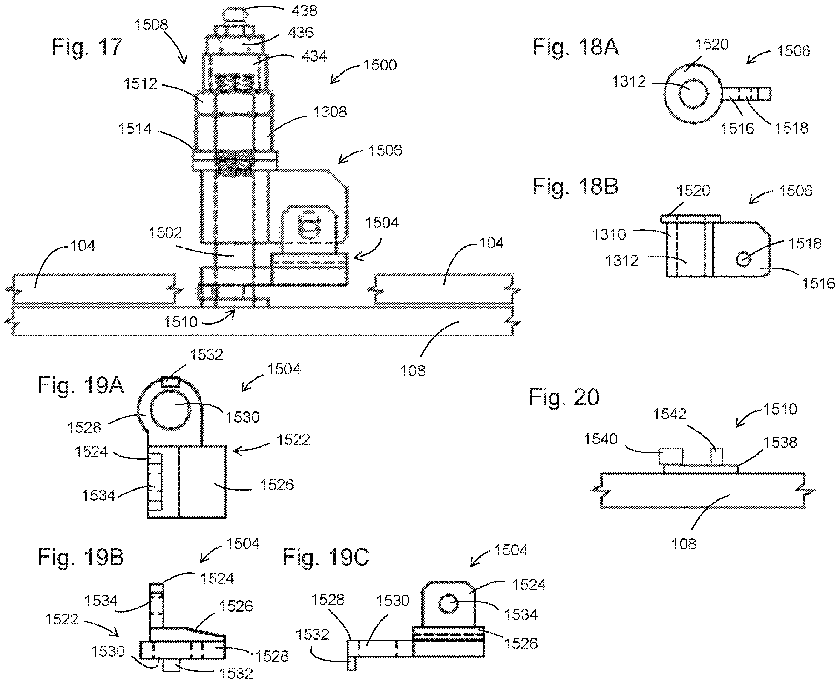

The body 1506 of Figs. 15-17 is substantially similar to the body 1306 of Figs. 13 and 14, but includes a top plate and a plate section defining an aperture. For example, and as shown best in Figs. 18A-B, the body 1506 includes the main section 1310 having the aperture 1312 of Figs. 13 and 14, a plate section 1516 extending from the main section 1310, and a top plate 1520 substantially aligned with a washer 1514 that is coupled between the body 1506 and the fastener 1308. As shown, the plate section 1516 defines an aperture 1518 to couple the base 1504 and the body 1506 together as further explained below.

As shown in Figs. 19A-C, the base 1504 includes a main portion 1522 and a plate portion 1524 extending from the main portion 1522. The main portion 1522 includes an inclined surface 1526 for receiving the plate section 1516 of the body 1506 as further explained below, and a floor 1528 defining an aperture 1530 for receiving the stud 1502.

The plate portion 1524 defines an aperture 1534 used to couple the base 1504 and the body 1506 together. For example, when the aperture 1534 of the base 1504 and the aperture 1518 of the body 1506 are substantially aligned, a fastener 1536 (e.g., a pin and/or another suitable fastener) can be positioned through the apertures 1518, 1534 for coupling the plate section 1516 and the plate portion 1524 together.

The body 1506 and/or the base 1504 can rotate about the stud 1502 independent from each other or as one collective component. For example, one or both of the base 1504 and the body 1506 can rotate between a closed position (shown in Figs. 15-16) and an open position (shown in Fig. 17), as explained above with reference to the fastener assembly 1300 of Figs. 13 and 14.

If a user intends to couple the structures 104, 108 together, it may be advantageous to move the base 1504 into its closed position before moving the body 1506 into its closed position. For example, the base 1504 can be rotated about the stud 1502 into its closed position such that the plate portion 1524 is positioned on a top surface of the structure 104.

After which, the body 1506 can be rotated into its closed position. For example, a user can rotate the body 1506 to its closed position by manually forcing the body to move, employing a tool to move the body, etc. In doing so, the plate section 1516 of the body 1506 may be moved up the inclined surface 1526 of the base 1504. Because the fastener 1308 can limit linear movement of the body 1506 (as explained above), the body 1306 can become wedged between the fastener 1308 and the inclined surface 1526 of the base 1504 thereby forcing the body 1506 against the fastener 1308 via the washer 1514). This causes a force to act on the structure 104 thereby pressing the structure 104 against the structure 108.

To decouple the structures 104, 108, a user can rotate the body 1506 and the base 1504 each into their open position. For example, a user can rotate one or both of the body 1506 and the base 1504 into their open position (shown in Fig. 17) by manually forcing the components to move, employing a tool to move the components, etc. At this point, the base 1504 may move downward on the stud 1502 towards the structure 108 due to gravity, etc. For example, and as shown in Fig. 17, the fastener 1536 is removed from the apertures 1518, 1534 allowing the base 1504 to move downward on the stud 1502 towards the structure 108.

As shown in Fig. 17, the body 1506 may remain near the fastener 1308 when the body 1506 is moved into its open position. For example, the body 1506 may include threads corresponding to the threads on the stud 1502 to maintain the position of the body 1506 relative to the stud 1502. The body 1506 may remain in this upward position until a user manipulates the body 1506. Alternatively, the body 1506 may move downward on the stud 1502 towards the structure 108 similar to the base 1504.

The inclined surface 1526 may allow a user to modify the applied force on the structure 104. For example, a length of the inclined surface 1526 may correlate to a range of forces that can be applied to the structure 104. In such examples, the bottom end of the inclined surface 1526 may correlate to a low force while the top end of the inclined surface 1526 may correlate to a high force. As such, a user can slide the plate section 1516 of the body 1506 up and/or down the inclined surface 1526 to ensure a desirable force is applied to the structure 104.

In some embodiments, the amount of rotation of the base 1504 may be restricted. For example, the fastener assembly 1500 can optionally include a stop 1510 coupled to the structure 108 for restricting rotation of the base 1504. In particular, and as shown best in Fig. 20, the stop 1510 includes a base plate 1538 coupled to the structure 108 and two stubs 1540, 1542 extending from the base plate 1538 on a side opposing the structure 108.

One of the two stubs 1540, 1542 may stop the base 1504 from rotating about the stud 1502. For example, and as shown best in Figs. 19A-C, the main portion 1522 of the base 1504 can optionally include a stub 1532 extending from the floor 1528. When the base 1504 is rotated in one direction, the stub 1532 of the base 1504 can contact one of the two stubs 1540, 1542 of the stop 1510 thereby preventing further movement of the base 1504 in that direction.

The stubs 1540, 1542 of the stop 1510 may be positioned in any suitable location. In the particular example of Figs. 15-17 and 20, the stubs 1540, 1542 are placed to form an arc length of about 90 degrees between the stubs 1540, 1542. As such, the base 1504 can rotate about 90 degrees. Alternatively, the stubs 1540, 1542 can be positioned differently to form a smaller or a greater arc length to allow the base 1504 to rotate less or more than about 90 degrees.

Additionally, and as shown in Figs. 15-17, the fastener system 1508 may include an encapsulating nut substantially similar to the encapsulating nut of Figs. 4-6. For example, the fastener system 1508 includes the fastener 1308 for detachably coupling to the threads of the stud 1502, a lock nut 1512 for restricting movement of the fastener 1308, and the encapsulating portion 434 and the cap 438 of Figs. 4-6. The encapsulating portion 434 defines the reservoir 436 for storing a lubricant, as explained above.

The stud 1502 of Figs. 15-17 may be substantially similar to the stud 1302 of Figs. 13 and 14, but may be longer to accommodate additional optional components such as the washer 1514, the modified body 1506, the base 1505, the encapsulating nut, etc.

Further, one or more gaskets may be employed between the structures 104, 108 if desired. Such gasket(s) may assist in providing a seal between the structures 104, 108 as explained herein.

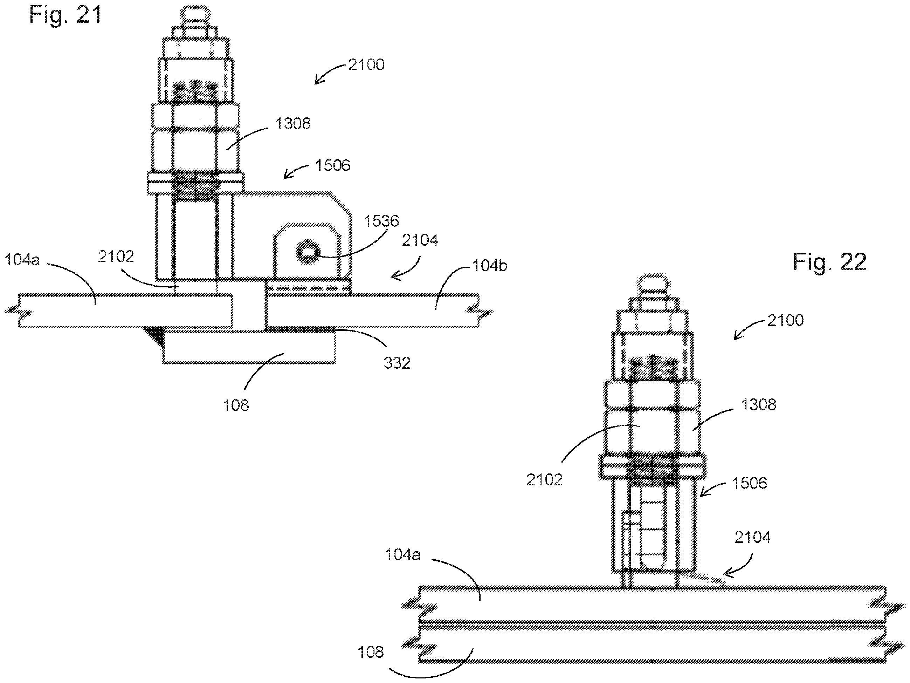

### Example 13: The Fastener Assembly of Figures 21-23

Figs. 21-23 illustrate another example fastener assembly 2100 that may be used in and/or adjacent to a system including structures 104a, 104b, 108 (as shown) and/or other suitable structures. As shown, the structure 108 is coupled to the structure 104a, and may function as a support between the structures 104a, 104b. This is sometimes called a backing bar design. In the particular example of Figs. 21-23, the fastener assembly 2100 is used to couple the structures 104b, 108 together. As a result, the structures 104a, 104b are secured together via the structure 108.

The fastener assembly 2100 is substantially similar to the fastener assembly 1500 of Figs. 15-17, but includes a different arrangement between its components. For example, the fastener assembly 2100 includes a base 2104 coupled to the structure 104b and a stud 2102 coupled to the structure 104a. The stud 2102 is substantially similar to the stud 1502 of Figs. 15-17.

The base 2104 may be coupled (e.g., temporarily or permanently) to the structure 104b in any suitable manner. For example, the base 2104 may be welded, adhered, etc. to the structure 104b. Additionally and/or alternatively, the base 2104 may be coupled to the structure 104b via one or more mechanical fasteners,

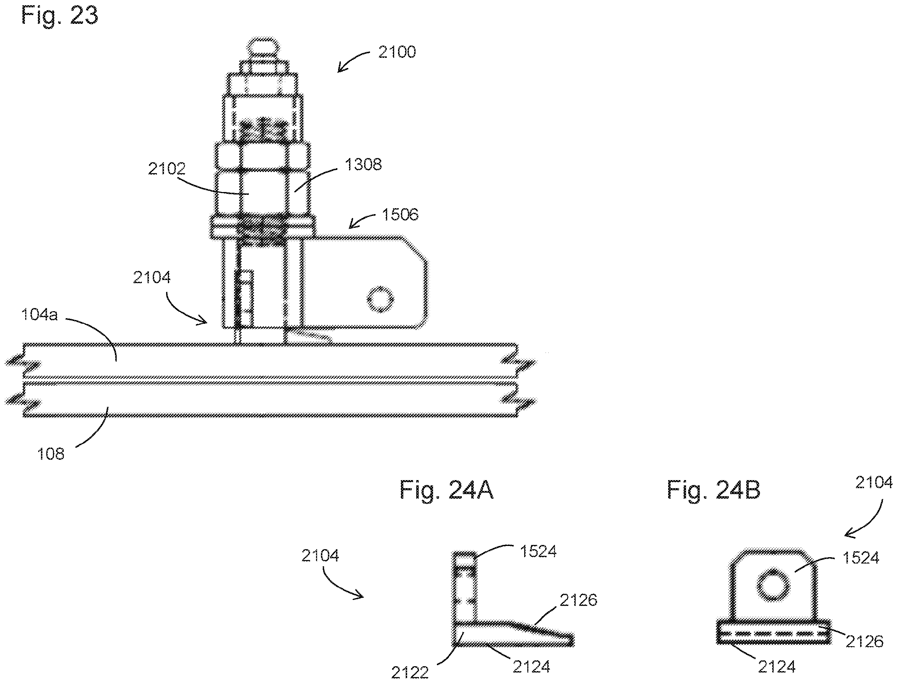

As shown best in Figs. 24A and 24B, the base 2104 includes a main portion 2122 and the plate portion 1524 of Figs. 15-17 extending from the main portion 2122. The main portion 2122 includes a bottom surface 2124 for coupling to the structure 104b, and an opposing inclined surface 2126. The inclined surface 2126 includes similar functions and features as the inclined surface 1526 of Figs. 15-17.

The fastener assembly 2100 functions similar to the fastener assembly 1500 of Figs. 15-17. For example, the body 1506 may rotate about the stud 2102 between its closed position (shown in Figs. 21 and 22) and its open position (shown in Fig. 23). When the body 1506 is rotated (e.g., manually, using a tool, etc.) to its closed position, a portion of the body 1506 may make contact with the inclined surface 2126 of the base 2104. This causes the body 1506 to become wedged between the fastener 1308 and the inclined surface 2126 of the base 2104 thereby forcing the body 1506 against the fastener 1308 as explained above. As a result, a force acts on the structure 104b thereby pressing the structure 104b against the structure 108. The body 1506 can be moved up the inclined surface 2126 to adjust the applied force on the structure 104b as explained above.

Additionally, and as shown in Fig. 21, the fastener 1536 of Fig. 15 and/or another suitable fastener may be utilized to couple the body 1506 and the base 2104 together if desired, as explained above.

Further, and as shown in Fig. 21, the gasket 332 of Fig. 3 may be positioned between the structures 104b, 108. Additionally or alternatively, another suitable gasket or no gasket may be employed if desired.

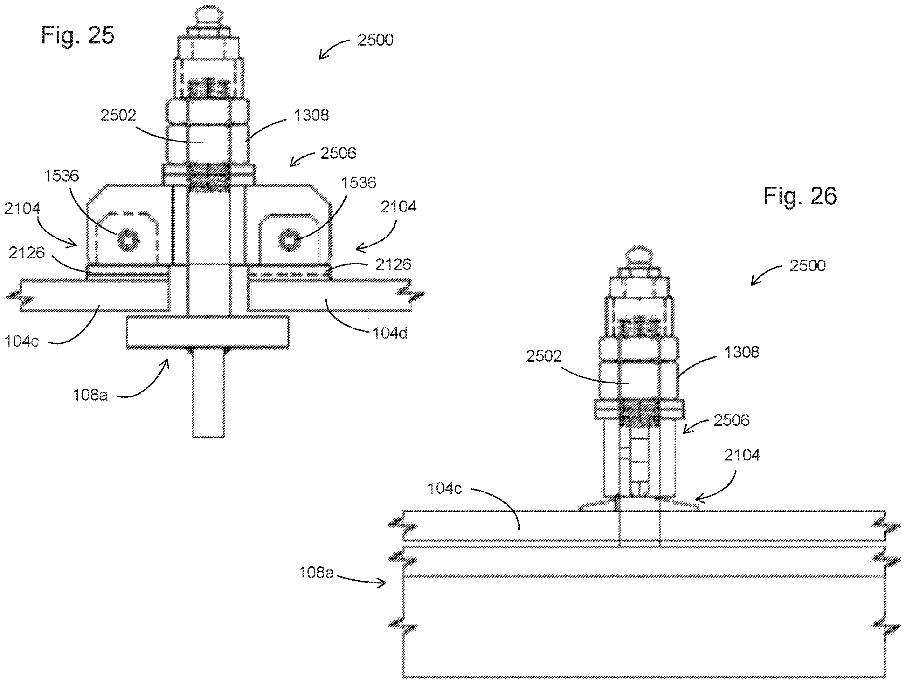

### Example 14: The Fastener Assembly of Figures 25-27

Figs. 25-27 illustrate another example fastener assembly 2500 that may be used in and/or adjacent to a system including structures 104c, 104d, 108a, (as shown) and/or other suitable structures. As shown, the structure 108a is positioned below the structures 104c, 104d, and includes a T-Beam design. The structure 108a includes a horizontal portion for supporting the structures 104c, 104d and a vertical portion extending from horizontal portion. In the particular example of Figs. 25-27, the fastener assembly 2500 is used to couple the structures 104c, 104d to the structure 108.

The fastener assembly 2500 is substantially similar to the fastener assembly 2100 of Figs. 21-23, but includes a different arrangement between its components. For example, the fastener assembly 2500 includes a stud 2502 coupled to the structure 108a, a body 2506 rotatable about the stud 2502, and two bases 2104 of Figs. 21-23 each coupled to one of the structures 104c, 104d. The stud 2502 is substantially similar to the stud 1502 of Figs. 15-17.

Similar to the base 2104 of the fastener assembly 2100, the bases 2104 of Figs. 25-27 may be coupled to the structures 104c, 104d in any suitable manner (e.g., welded, adhered, mechanically fastened, etc.).

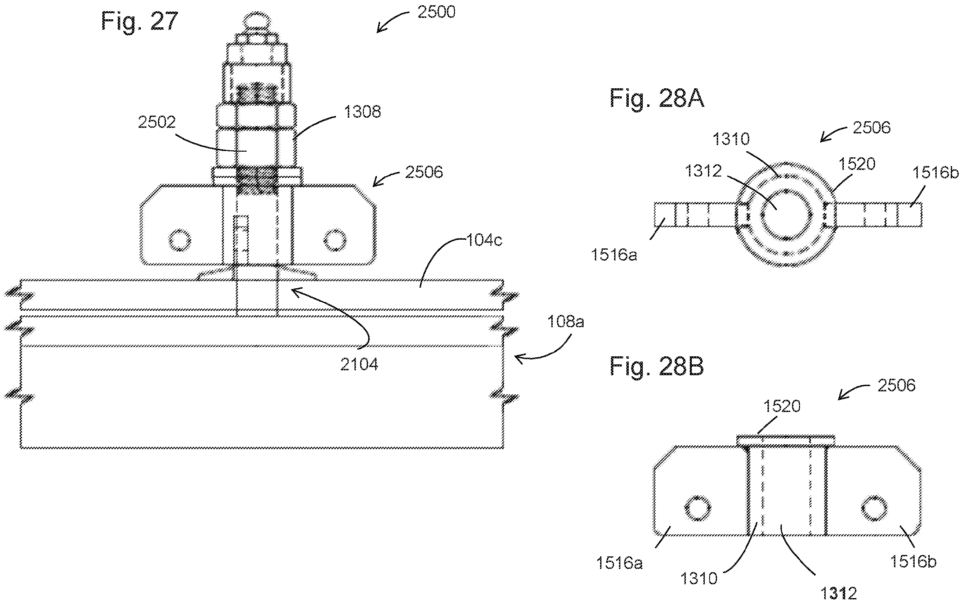

As shown best in Figs. 28A and 28B, the body 2506 includes the main section 1310 having the aperture 1312 of Figs. 13 and 14, the top plate 1520 of Figs. 15-18 positioned on the main section 1310, and two plate sections 1516 (shown as plate sections 1516a, 1516b) of Figs. 15-18 each extending from the main section 1310. As shown, the plate sections 1516a, 1516b extend from opposing sides of the main section 1310 such that the plate sections are about 180 degrees apart. Alternatively, one or both of the plate sections 1516a, 1516b may extend from another portion of the main section 1310 if desired.

The fastener assembly 2500 functions similar to the fastener assembly 2100 of Figs. 21-23. For example, the body 2506 may rotate about the stud 2502 between its closed position (shown in Figs. 25 and 26) and its open position (shown in Fig. 27). When the body 2506 is rotated to its closed position, each plate section 1516a, 1516b of the body 2506 make contact with one inclined surface 2126 of each base 2104. This causes the body 2506 to become wedged between the fastener 1308 and each inclined surface 2126 thereby forcing the body 2506 against the fastener 1308 as explained above. In turn, a force acts on the structures 104c, 104d thereby pressing the structures 104c, 104d against the structure 108a. The body 2506 can be rotated as desired to move the plate sections 1516a, 1516b up/down the inclined surfaces 2126 to adjust the applied force on the structures 104c, 104d as explained above.

Additionally, and as explained above, fasteners such as the fastener 1536 of Fig. 15 and/or another suitable fastener may be utilized to couple the body 2506 and the bases 2104 together, as shown in Fig. 25.

Further, although not shown, one or more gaskets may be employed between the structures 104c, 108 and/or the structures 104d, 108 if desired. Such gasket(s) may function as other gaskets disclosed herein.

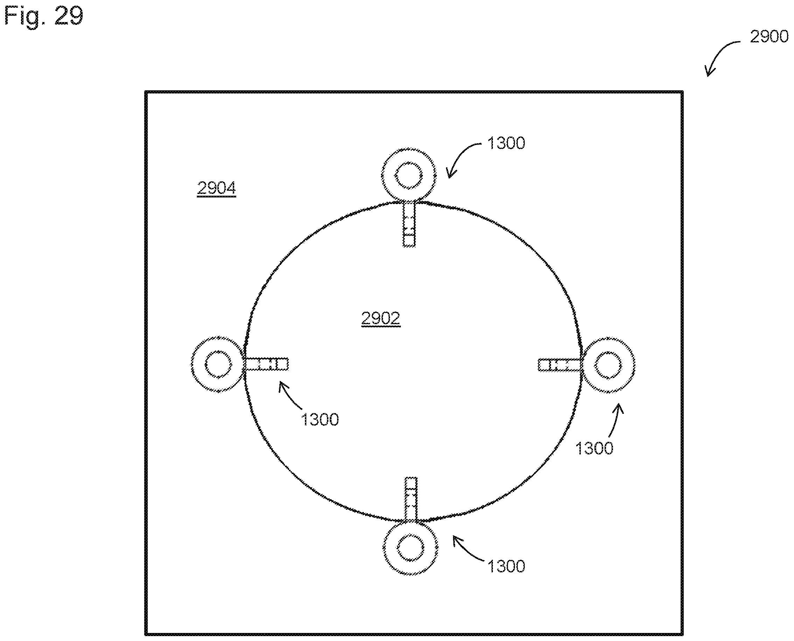

### Example 15: The System of Figure 29

Fig. 29 illustrates a system 2900 including the structures 2902, 2904 and various fastener assemblies. In particular, the fastener assemblies include four fastener assemblies 1300 of Figs. 13 and 14. Each fastener assembly 1300 detachably couples the structures 2902, 2904 together, as explained above. The structures 2902, 2904 may be substantially similar to and/or different than any of the other structures disclosed herein including, for example, the structures 104, 108, the structures 704, 708, etc.

In the particular example of Fig. 29, the structure 2902 represents a panel (e.g., a manway cover, etc.) and the structure 2904 represents a portion of a beam (e.g., a lattice beam, etc.). In other embodiments, the structures 2902, 2904 may each represent a panel. In such examples, another structure may be employed with the structures 2902, 2904 such as a backing bar structure, a T-Beam structure, etc. as explained above. Alternatively, the structures 2902, 2904 may each represent another suitable structure (and/or a portion thereof).

Although the system 2900 includes four fastener assemblies 1300, it should be apparent to those skilled in the art that more or less fastener assemblies 1300 and/or different fastener assemblies (including the fastener assemblies disclosed herein) may be employed without departing from the scope of the disclosure. For example, the system 2900 may include one fastener assembly 1300 and five fastener assemblies 400, two fastener assemblies 1300 and two fastener assemblies 1500, eight fastener assemblies 2100, etc.

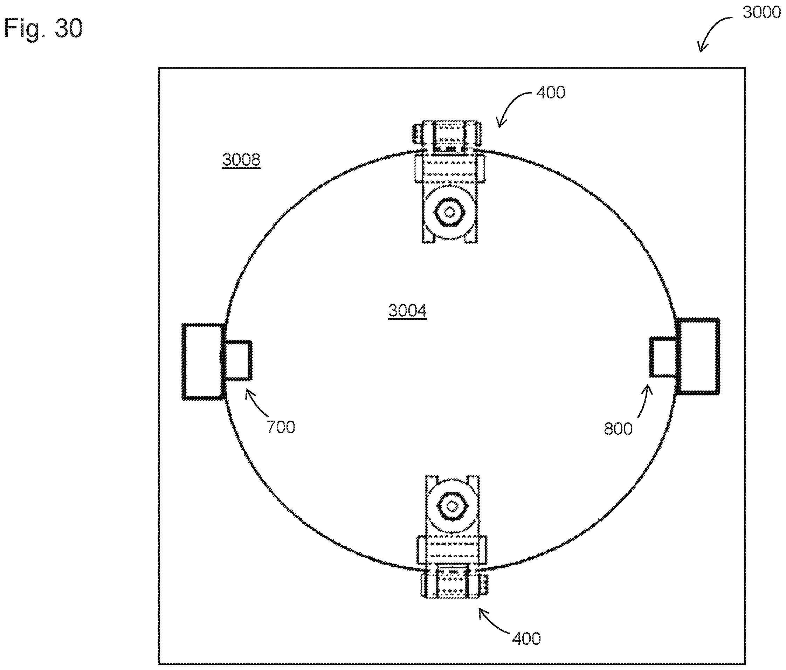

### Example 16 The System of Figure 30

Fig. 30 illustrates another example system 3000 including structures 3004, 3008 and various fastener assemblies. In particular, the fastener assemblies include two fastener assemblies 400 of Figs. 4-6 and two fastener assemblies 700 of Figs. 7A and 7B. Each fastener assembly 400, 700 detachably couples the structure 3004 to the structure 3008, as explained above.

Although the system 3000 includes two fastener assemblies 400 and two fastener assemblies 700, it should be apparent to those skilled in the art that more or less fastener assemblies and/or different fastener assemblies (including the fastener assemblies disclosed herein) may be employed without departing from the scope of the disclosure. For example, the system 3000 may include one type of fastener assemblies such as three fastener assemblies 400, five fastener assemblies 800 of Fig. 8, eight fastener assemblies 200 of Fig. 2, twelve fastener assemblies 2500 of Fig. 25, etc. In other embodiments, the system 3000 can include two fastener assemblies 400, one fastener assembly 100 of Figs. 1A and 1B, one fastener assembly 300 of Fig. 3, one fastener assembly 700, and one fastener assembly 1300 of Fig. 13.

Additionally, the structures 3004, 3008 may be substantially similar to and/or different than any of the other structures disclosed herein including, for example, the structures 104, 108, the structures 704, 708, etc. For example, the structure 3004 may be a manway cover and the structure 3008 may be a beam like structure positioned adjacent the manway cover, as explained above. Alternatively, the structures 3004, 3008 may be other suitable structures.

## Claims

1. A fastener assembly (100) for detachably coupling two structures (104, 108) together, the fastener assembly comprising:
a stud (102) configured to couple to a first structure such that the stud extends from the first structure when the stud is coupled to the first structure,
a body (106) configured to pivotally couple to a second structure different than the first structure, the body pivotable between a closed position in which the body is positioned adjacent the stud when coupled to the first structure and an open position in which the body is positioned aside from the first structure, the body defining at least one aperture for receiving the stud when the body is in the closed position,
a fastener (110) configured to detachably couple to the stud and force the body against the first structure when the body is in the closed position to detachably couple the first structure to the second structure, **characterised by** at least one gasket (332) extending between the first structure and the second structure when the first structure is coupled to the second structure,
wherein the body is defined by a top side and a bottom side, the fastener assembly further comprising a protrusion (324) extending from the bottom side of the body, the protrusion configured to substantially align with the at least one gasket when the body is in the closed position.

2. The fastener assembly of claim 1, wherein the body is pivotally coupled to the second structure via a hinge.

3. The fastener assembly of claim 1 or claim 2, wherein the stud includes threads and wherein the fastener includes threads corresponding to the threads of the stud.

4. The fastener assembly of any of the preceding claims, wherein the fastener includes a nut.

5. The fastener assembly of claim 4, wherein the nut includes an encapsulating nut.

6. The fastener assembly of claim 5, wherein the encapsulating nut defines a reservoir for storing a lubricant.

7. The fastener assembly of any of the preceding claims, wherein the stud extends substantially perpendicular from the first structure when the stud is coupled to the first structure.

8. The fastener assembly of any of the preceding claims, wherein the body is defined by at least two opposing sides and wherein the at least one aperture includes a channel extending from one of the opposing sides.

9. The fastener assembly of anyone of the preceding claims, wherein the fastener assembly is used in a reactor.

10. A system comprising:
a plurality of structures, the plurality of structures including a first structure and a second structure, and one or more fastener assemblies for detachably coupling the first structure to the second structure, at least one fastener assembly of the one or more fastener assemblies being a fastener assembly according to anyone of claims 1 to 9.

11. The system of claim 10, wherein the stud of the at least one fastener assembly is welded to the first structure.

12. The system of claim 10 or 11, wherein at least one of the plurality of structures is used in a manway cover, a reactor, a manway cover tray, a tray deck panel, a beam, an enclosure or a part thereof.

## Patentansprüche

1. Befestigungsvorrichtung (100) zum lösbaren Verbinden zweier Strukturen (104, 108), wobei die Befestigungsvorrichtung umfasst:
einen Bolzen (102), der konfiguriert ist, um mit einer ersten Struktur verbunden zu werden, so dass sich der Bolzen von der ersten Struktur erstreckt, wenn der Bolzen mit der ersten Struktur verbunden ist,
einen Körper (106), der konfiguriert ist, um schwenkbar mit einer zweiten Struktur verbunden zu werden, die sich von der ersten Struktur unterscheidet, wobei der Körper schwenkbar ist zwischen einer geschlossenen Position, in der der Körper benachbart zu dem Bolzen positioniert ist, wenn dieser mit der ersten Struktur verbunden ist, und einer offenen Position, in der der Körper benachbart zu der ersten Struktur positioniert ist, wobei der Körper mindestens eine Öffnung zum Aufnehmen des Bolzens definiert, wenn sich der Körper in der geschlossenen Position befindet,
einen Verschluss (110), der konfiguriert ist, um lösbar mit dem Bolzen verbunden zu werden und den Körper gegen die erste Struktur zu drücken, wenn sich der Körper in der geschlossenen Position befindet, um die erste Struktur lösbar mit der zweiten Struktur zu verbinden,
**gekennzeichnet durch**
mindestens eine Dichtung (332), die sich zwischen der ersten Struktur und der zweiten Struktur erstreckt, wenn die erste Struktur mit der zweiten Struktur verbunden ist,
wobei der Körper durch eine Oberseite und eine Unterseite definiert ist, wobei die Befestigungsvorrichtung weiterhin einen Vorsprung (324) umfasst, der sich von der Unterseite des Körpers erstreckt, wobei der Vorsprung so konfiguriert ist, dass er im Wesentlichen mit der mindestens einen Dichtung ausgerichtet ist, wenn sich der Körper in der geschlossenen Position befindet.

2. Befestigungsvorrichtung nach Anspruch 1, wobei der Körper über ein Scharnier schwenkbar mit der zweiten Struktur verbunden ist.

3. Befestigungsvorrichtung nach Anspruch 1 oder 2, wobei der Bolzen Gewinde enthält und wobei der Verschluss Gewinde enthält, die den Gewinden des Bolzens entsprechen.

4. Befestigungsvorrichtung nach einem der vorgehenden Ansprüche, wobei das Befestigungselement eine Mutter enthält.

5. Befestigungsvorrichtung nach Anspruch 4, wobei die Mutter eine Einkapselungsmutter enthält.

6. Befestigungsvorrichtung nach Anspruch 5, wobei die Einkapselungsmutter einen Vorratsbehälter zum Speichern eines Schmiermittels definiert.

7. Befestigungsvorrichtung nach einem der vorgehenden Ansprüche, wobei sich der Bolzen im Wesentlichen senkrecht von der ersten Struktur erstreckt, wenn der Bolzen mit der ersten Struktur verbunden ist.

8. Befestigungsvorrichtung nach einem der vorgehenden Ansprüche, wobei der Körper durch mindestens zwei gegenüberliegende Seiten definiert ist und wobei die mindestens eine Öffnung einen Kanal aufweist, der sich von einer der gegenüberliegenden Seiten erstreckt.

9. Befestigungsvorrichtung nach einem der vorgehenden Ansprüche, wobei die Befestigungsvorrichtung in einem Reaktor verwendet wird.

10. System, umfassend:
eine Vielzahl von Strukturen, wobei die Vielzahl von Strukturen eine erste Struktur und eine zweite Struktur und eine oder mehrere Befestigungsvorrichtungen zum lösbaren Verbinden der ersten Struktur mit der zweiten Struktur umfassen, wobei mindestens eine Befestigungsvorrichtung der einen oder der mehreren Befestigungsvorrichtungen eine Befestigungsvorrichtung gemäß einem der Ansprüche 1 bis 9 ist.

11. System nach Anspruch 10, wobei der Bolzen der mindestens einen Befestigungsvorrichtung mit der ersten Struktur verschweißt ist.

12. System nach Anspruch 10 oder 11, wobei mindestens eine der Vielzahl von Strukturen in einer Schachtabdeckung, einem Reaktor, einer Schachtabdeckungsschale, einer Bodendeckplatte, einem Balken, einem Gehäuse oder einem Teil davon verwendet wird.

## Revendications

1. Ensemble de fixation (100) pour accoupler de manière détachable deux structures (104, 108) l'une à l'autre, l'ensemble de fixation comprenant :
un goujon (102) configuré pour s'accoupler à une première structure de telle sorte que le goujon s'étende depuis la première structure lorsque le goujon est accouplé à la première structure,
un corps (106) configuré pour s'accoupler de manière pivotante à une deuxième structure différente de la première structure, le corps pouvant pivoter entre une position fermée dans laquelle le corps est positionné à côté du goujon lorsqu'il est accouplé à la première structure, et
une position ouverte dans laquelle le corps est positionné à l'écart de la première structure, le corps définissant au moins une ouverture pour recevoir le goujon lorsque le corps est dans la position fermée,
une fixation (110) configurée pour s'accoupler de manière détachable au goujon et pour forcer le corps contre la première structure lorsque le corps est dans la position fermée pour accoupler de manière détachable la première structure à la deuxième structure,
**caractérisé par**
au moins une garniture d'étanchéité (332) s'étendant entre la première structure et la deuxième structure lorsque la première structure est accouplée à la deuxième structure,
le corps étant défini par un côté supérieur et un côté inférieur, l'ensemble de fixation comprenant en outre une saillie (324) s'étendant depuis le côté inférieur du corps, la saillie étant configurée pour s'aligner substantiellement avec l'au moins une garniture d'étanchéité lorsque le corps est dans la position fermée.

2. Ensemble de fixation selon la revendication 1, dans lequel le corps est accouplé de manière pivotante à la deuxième structure par le biais d'une charnière.

3. Ensemble de fixation selon la revendication 1 ou la revendication 2, le goujon comportant des filetages et la fixation comportant des filetages correspondants aux filetages du goujon.

4. Ensemble de fixation selon l'une quelconque des revendications précédentes, dans lequel la fixation comprend un écrou.

5. Ensemble de fixation selon la revendication 4, dans lequel l'écrou comporte un écrou d'enveloppement.

6. Ensemble de fixation selon la revendication 5, l'écrou d'enveloppement définissant un réservoir pour stocker un lubrifiant.

7. Ensemble de fixation selon l'une quelconque des revendications précédentes, dans lequel le goujon s'étend substantiellement perpendiculairement depuis la première structure lorsque le goujon est accouplé à la première structure.

8. Ensemble de fixation selon l'une quelconque des revendications précédentes, dans lequel le corps est défini par au moins deux côtés opposés et dans lequel l'au moins une ouverture comporte un canal s'étendant depuis l'un des côtés opposés.

9. Ensemble de fixation selon l'une quelconque des revendications précédentes, l'ensemble de fixation étant utilisé dans un réacteur.

10. Système comprenant :
une pluralité de structures, la pluralité de structures comportant une première structure et une deuxième structure, et un ou plusieurs ensembles de fixation pour accoupler de manière détachable la première structure à la deuxième structure, au moins un ensemble de fixation du ou des ensembles de fixation étant un ensemble de fixation selon l'une quelconque des revendications 1 à 9.

11. Système selon la revendication 10, dans lequel le goujon de l'au moins un ensemble de fixation est soudé à la première structure.

12. Système selon la revendication 10 ou 11, dans lequel au moins l'une de la pluralité de structures est utilisée dans un couvercle de trou d'homme, un réacteur, un plateau de couvercle de trou d'homme, un panneau de recouvrement de plateau, une poutre, une enceinte ou une partie de ceux-ci.
